# EUROPEAN PATENT APPLICATION

(11) **EP 4 844 874 A1**
(43) Date of publication of application: **25.11.2026**
(21) Application number: 25752208.6
(22) Date of filing: 06.02.2025
(51) Int. Cl.: H01M 10/0569, H01G 11/30, H01G 11/60, H01G 11/62, H01G 11/84, H01M 4/38, H01M 10/052, H01M 10/0568, H01M 10/058

(54) **NONAQUEOUS ELECTROLYTE POWER STORAGE ELEMENT, NONAQUEOUS ELECTROLYTE, AND METHOD FOR PRODUCING NONAQUEOUS ELECTROLYTE POWER STORAGE ELEMENT**

(30) Priority: 09.02.2024 JP 2024018940; 26.08.2024 JP 2024145018; 26.08.2024 JP 2024145019; 26.08.2024 JP 2024145020
(71) Applicant: GS Yuasa International Ltd., Kisshoin, Minami-ku, Kyoto-shi, Kyoto 601-8520 (JP)
(72) Inventor: KISHIMOTO, Akira, Kyoto-shi, Kyoto 601-8520 (JP)
(74) Representative: Isarpatent
(86) International application number: PCT/JP2025/003885
(87) International publication number: WO 2025/169983

(57) **Abstract**

A non-aqueous electrolyte energy storage device according to an aspect of the present invention includes a negative electrode containing metallic lithium at least in a charged state, and a non-aqueous electrolyte containing an electrolyte salt, an ionic liquid, and a non-aqueous solvent, wherein the non-aqueous solvent contains a fluorinated cyclic ether, and a molality of the electrolyte salt in the non-aqueous electrolyte is not less than 0.8 mol/kg and not more than 3.5 mol/kg.

## Description

### TECHNICAL FIELD

The present invention relates to a non-aqueous electrolyte energy storage device, a non-aqueous electrolyte, and a method for manufacturing the non-aqueous electrolyte energy storage device.

### BACKGROUND ART

Non-aqueous electrolyte secondary batteries, typified by lithium-ion secondary batteries, are widely used in electronic devices such as personal computers and communication terminals, automobiles, and the like, because of their high energy density. A non-aqueous electrolyte secondary battery generally includes a pair of electrodes electrically isolated by a separator and a non-aqueous electrolyte interposed between the electrodes, and is configured to be charged and discharged by transfer of charge transport ions such as lithium ions between the two electrodes. As non-aqueous electrolyte energy storage devices other than non-aqueous electrolyte secondary batteries, capacitors such as lithium-ion capacitors and electric double-layer capacitors, and the like are also widely used.

Metallic lithium is known as a negative electrode active material having a high energy density used in the non-aqueous electrolyte energy storage device (see Patent Literature 1). In recent years, studies have also progressed on non-aqueous electrolyte energy storage devices using an ionic liquid as a non-aqueous electrolyte (see Patent Literature 2). An ionic liquid is also referred to as a room-temperature molten salt or the like, and has advantages such as having substantially no volatility and having high flame retardancy while being liquid themselves at room temperature.

### CITATION LIST

### Patent Literature

Patent Literature 1: Japanese Unexamined Patent Application Publication No. 2016-100065
Patent Literature 2: Japanese Unexamined Patent Application Publication No. 2001-319688

### DISCLOSURE OF INVENTION

### PROBLEMS TO BE SOLVED BY THE INVENTION

In some cases, a conventional non-aqueous electrolyte energy storage device in which an ionic liquid is used in a non-aqueous electrolyte cannot sufficiently and repeatedly perform favorable charging and discharging due to a large overvoltage, occurrence of an internal short circuit accompanying the repeated charging and discharging, and the like.

An object of the present invention is to provide a non-aqueous electrolyte energy storage device in which an ionic liquid is used in a non-aqueous electrolyte, which has a small overvoltage, and in which occurrence of an internal short circuit accompanying repeated charging and discharging is also suppressed; a method for manufacturing such a non-aqueous electrolyte energy storage device; and a non-aqueous electrolyte in which an ionic liquid is used, the non-aqueous electrolyte being capable of reducing the overvoltage of a non-aqueous electrolyte energy storage device and suppressing occurrence of an internal short circuit accompanying repeated charging and discharging.

### MEANS FOR SOLVING THE PROBLEMS

A non-aqueous electrolyte energy storage device according to an aspect of the present invention includes a negative electrode containing metallic lithium at least in a charged state, and a non-aqueous electrolyte containing an electrolyte salt, an ionic liquid, and a non-aqueous solvent, wherein the non-aqueous solvent contains a fluorinated cyclic ether, and a molality of the electrolyte salt in the non-aqueous electrolyte is not less than 0.8 mol/kg and not more than 3.5 mol/kg.

A non-aqueous electrolyte according to another aspect of the present invention includes an electrolyte salt, an ionic liquid, and a non-aqueous solvent, wherein the non-aqueous solvent contains a fluorinated cyclic ether, and a molality of the electrolyte salt is not less than 0.8 mol/kg and not more than 3.5 mol/kg.

A method for manufacturing a non-aqueous electrolyte energy storage device according to another aspect of the present invention includes preparing a negative electrode containing metallic lithium at least in a charged state, and preparing a non-aqueous electrolyte containing an electrolyte salt, an ionic liquid, and a non-aqueous solvent, wherein the non-aqueous solvent contains a fluorinated cyclic ether, and a molality of the electrolyte salt in the non-aqueous electrolyte is not less than 0.8 mol/kg and not more than 3.5 mol/kg.

### EFFECT OF THE INVENTION

According to any one of aspects of the present invention, it is possible to provide a non-aqueous electrolyte energy storage device in which an ionic liquid is used in a non-aqueous electrolyte, which has a small overvoltage, and in which occurrence of an internal short circuit accompanying repeated charging and discharging is also suppressed; a method for manufacturing such a non-aqueous electrolyte energy storage device; and a non-aqueous electrolyte in which an ionic liquid is used, the non-aqueous electrolyte being capable of reducing the overvoltage of a non-aqueous electrolyte energy storage device and suppressing occurrence of an internal short circuit accompanying repeated charging and discharging.

### BRIEF DESCRIPTION OF THE DRAWINGS

[FIG. 1] FIG. 1 is a perspective view illustrating a non-aqueous electrolyte energy storage device according to one embodiment of the present invention.
[FIG. 2] FIG. 2 is a schematic view illustrating an energy storage apparatus including a plurality of non-aqueous electrolyte energy storage devices according to one embodiment of the present invention.

### DESCRIPTION OF EMBODIMENTS

First, an outline of the non-aqueous electrolyte energy storage device, the non-aqueous electrolyte, and the method for manufacturing the non-aqueous electrolyte energy storage device disclosed in the present specification will be described.

[1] A non-aqueous electrolyte energy storage device according to an aspect of the present invention includes: a negative electrode containing metallic lithium at least in a charged state; and a non-aqueous electrolyte containing an electrolyte salt, an ionic liquid, and a non-aqueous solvent, wherein the non-aqueous solvent contains a fluorinated cyclic ether, and a molality of the electrolyte salt in the non-aqueous electrolyte is not less than 0.8 mol/kg and not more than 3.5 mol/kg.

The non-aqueous electrolyte energy storage device described in [1] above is a non-aqueous electrolyte energy storage device in which an ionic liquid is used in a non-aqueous electrolyte, which has a small overvoltage, and in which occurrence of an internal short circuit accompanying repeated charging and discharging is also suppressed. Although the reason for this is not clear, the following reasons are presumed. Since a non-aqueous electrolyte containing an ionic liquid has high viscosity and low diffusibility of charge transport ions, a non-aqueous electrolyte energy storage device using the non-aqueous electrolyte containing an ionic liquid has a large overvoltage. Therefore, it is conceivable to reduce the viscosity of the non-aqueous electrolyte by adding an appropriate non-aqueous solvent to the non-aqueous electrolyte containing the ionic liquid. However, depending on the type of the non-aqueous solvent to be added, the non-aqueous solvent itself has low reduction resistance and is unstable, or a film derived from the non-aqueous solvent and formed on the surface of the negative electrode has high resistance or is unstable, and therefore the overvoltage is not reduced and an internal short circuit is also likely to occur. On the other hand, it is considered that the fluorinated cyclic ether has high reduction resistance, and the film derived from the fluorinated cyclic ether and formed on the surface of the negative electrode is also favorable. Furthermore, since the fluorinated cyclic ether is unlikely to interact with charge transport ions, it is considered that the fluorinated cyclic ether is also unlikely to inhibit the diffusibility of the charge transport ion. In addition, when the concentration of the electrolyte salt in the non-aqueous electrolyte is low, the concentration of charge transport ions in the non-aqueous electrolyte becomes low, and when the concentration of the electrolyte salt is high, the viscosity of the non-aqueous electrolyte becomes high. Therefore, in either case, the diffusibility of the charge transport ions becomes low. Therefore, it is considered that the concentration of the electrolyte salt needs to be adjusted to an appropriate range in order to increase the diffusibility of the charge transport ions, reduce the overvoltage, and suppress occurrence of an internal short circuit accompanying repeated charging and discharging. In the non-aqueous electrolyte energy storage device described in [1] above, since the non-aqueous electrolyte contains a fluorinated cyclic ether together with an ionic liquid, and the molality of the electrolyte salt is within a predetermined range, the diffusivity of the charge transport ions in the non-aqueous electrolyte is high, and a favorable film derived from the fluorinated cyclic ether is formed on the surface of the negative electrode. Therefore, it is presumed that the non-aqueous electrolyte energy storage device described in [1] above has a small overvoltage and that occurrence of an internal short circuit accompanying repeated charging and discharging is also suppressed. Further, in the non-aqueous electrolyte energy storage device described in [1] above, an increase in overvoltage accompanying repeated charging and discharging is also suppressed.

In addition, since the non-aqueous electrolyte energy storage device described in [1] above includes a negative electrode containing metallic lithium at least in a charged state, the non-aqueous electrolyte energy storage device also has advantages such as high energy density. On the other hand, in general, a non-aqueous electrolyte energy storage device including a negative electrode containing metallic lithium is likely to undergo an internal short circuit accompanying repeated charging and discharging. Therefore, in the non-aqueous electrolyte energy storage device described in [1] above, the advantage that an internal short circuit accompanying repeated charging and discharging can be suppressed and favorable charging and discharging can be sufficiently and repeatedly performed is particularly remarkably obtained. In other words, the non-aqueous electrolyte energy storage device described in [1] above can achieve both a high energy density and suppression of occurrence of an internal short circuit.

In the present specification, the content of each component contained in the non-aqueous electrolyte is defined as a value measured at 20 °C and 1 atm, or a value converted to a value at 20 °C and 1 atm.

The types of ionic compounds, such as an electrolyte salt and an ionic liquid, contained in the non-aqueous electrolyte are identified by carrying out, in combination as necessary, analyses selected from ion chromatography (IC), liquid chromatography-mass spectrometry (LC-MS), ¹H-NMR, multinuclear NMR, and the like.

The content of ionic compounds, such as an electrolyte salt and an ionic liquid, contained in the non-aqueous electrolyte is determined by IC. However, the content of cations of the ionic liquid contained in the non-aqueous electrolyte is determined by LC-MS. If the content cannot be determined by LC-MS, it is determined by an internal standard method using ¹H-NMR.

Specifically, IC measurement is performed as follows.

### (A1) Collection of non-aqueous electrolyte

First, the non-aqueous electrolyte energy storage device is disassembled to remove the non-aqueous electrolyte. If the non-aqueous electrolyte cannot be removed, centrifugation is performed on the non-aqueous electrolyte energy storage device to remove the non-aqueous electrolyte. If the non-aqueous electrolyte cannot be removed even by centrifugation, an appropriate extraction solvent (for example, acetonitrile) is injected into the non-aqueous electrolyte energy storage device, and the non-aqueous electrolyte diluted with the extraction solvent is removed.

### (A2) IC analysis

Components of the collected non-aqueous electrolyte are analyzed by IC. IC analysis is performed in the following order: qualitative analysis and quantitative analysis.

### (Qualitative analysis)

A measurement sample (non-aqueous electrolyte) is subjected to IC analysis. Components contained in the measurement sample are predicted from peak positions of respective peaks of the obtained ion chromatogram. A known sample of the predicted component (hereinafter referred to as the "predicted component") is subjected to IC analysis. Retention times of peaks corresponding to the respective predicted components in the measurement sample are compared with retention times of peaks of known samples of the respective predicted components, and if they match, the above prediction is presumed to be correct.

### (Quantitative analysis)

Quantitative analysis is performed by a calibration curve method. First, a known sample of a predicted component having a known concentration is subjected to IC analysis to determine a peak area, and a calibration curve is prepared. The calibration curve is prepared such that the coefficient of determination (r²) is not less than 0.999 and not more than 1. The content of the predicted component in the measurement sample is determined from the calibration curve and the peak area of the predicted component in the measurement sample. The above operation is performed for all peaks detected in the IC analysis of the measurement sample, and the content of each predicted component is determined. Note that, in order to suppress measurement-to-measurement variation in measurement error, the quantitative analysis is performed on the same day using the same apparatus under the same conditions unless there are special circumstances, and replacement of consumables, adjustment of the apparatus, and the like are not carried out until all measurements are completed. In the present specification, the same applies to other quantitative analyses.

The types of non-ionic compounds, such as non-aqueous solvents, contained in the non-aqueous electrolyte are identified by performing, in combination as necessary, analyses selected from liquid chromatography-mass spectrometry (LC-MS), gas chromatography-mass spectrometry (GC-MS), ¹H-NMR, multinuclear NMR, and the like. The content of non-ionic compounds, such as non-aqueous solvents, contained in the non-aqueous electrolyte is determined by LC-MS and GC-MS. Specifically, LC-MS and GC-MS measurements are performed as follows.

### (B1) Collection of non-aqueous electrolyte

The non-aqueous electrolyte is recovered in the same procedure as in the above "(A1) Collection of non-aqueous electrolyte".

### (B2) LC-MS

Components of the collected non-aqueous electrolyte are analyzed by LC-MS. LC-MS analysis is performed in the following order: qualitative analysis and quantitative analysis. As apparatuses for LC-MS analysis, "Acquity H" and "Xevo G2-5QTof" manufactured by Waters are used. Water is used as an eluent. Note that, if it is difficult to perform measurements using the above-mentioned models of the measuring apparatus, the measurements can be performed using other models that are considered to yield equivalent measurement results. In the present specification, the same applies to other measuring apparatuses.

### (Qualitative analysis)

A measurement sample (non-aqueous electrolyte) is subjected to LC-MS analysis. When peaks of the obtained liquid chromatogram cannot be separated, GC-MS analysis described below is performed instead of LC-MS analysis. When the peaks are separated, components contained in the measurement sample are predicted from the MS spectrum of each peak obtained by LC-MS analysis. A known sample of the predicted component is subjected to LC-MS analysis. Retention times and MS spectra of peaks corresponding to the respective predicted components in the measurement sample are compared with retention times and MS spectra of peaks of known samples of the respective predicted components, and if they match, the above prediction is presumed to be correct.

### (Quantitative analysis)

Quantitative analysis is performed by a calibration curve method. Quantitative analysis by LC-MS is performed in the same procedure as the above-mentioned quantitative analysis by IC to determine the content of each predicted component.

### (B3) GC-MS

Analysis by GC-MS is performed in the following order: qualitative analysis and quantitative analysis. As the apparatus for GC-MS analysis, "5975C" manufactured by Agilent is used. Argon is used as a carrier gas.

### (Qualitative analysis)

A measurement sample (non-aqueous electrolyte) is subjected to GC-MS analysis. Components contained in the sample are predicted from the MS spectrum of each peak of the obtained gas chromatogram. A known sample of the predicted component is subjected to GC-MS analysis. Retention times and MS spectra of peaks corresponding to the predicted components in the measurement sample are compared with retention times and MS spectra of peaks of known samples of the respective predicted components, and if they match, the above prediction is presumed to be correct.

### (Quantitative analysis)

Quantitative analysis is performed by a calibration curve method. Quantitative analysis by GC-MS is performed according to the same procedure as the above-mentioned quantitative analysis by IC to determine the content of each predicted component.

The "molality" refers to the amount of substance (in moles) of the electrolyte salt, based on the total mass (in kilograms) of the ionic liquid and the non-aqueous solvent.

[2] In the non-aqueous electrolyte energy storage device described in [1] above, the content of the fluorinated cyclic ether with respect to the total of the ionic liquid and the non-aqueous solvent may be not less than 5% by volume and not more than 95% by volume.

The non-aqueous electrolyte energy storage device described in [2] above has an appropriate content of the fluorinated cyclic ether and has a smaller overvoltage, and occurrence of an internal short circuit more is suppressed.

[3] In the non-aqueous electrolyte energy storage device described in [1] or [2] above, the content of the fluorinated cyclic ether with respect to the total of the ionic liquid and the non-aqueous solvent may be not less than 5% by volume and not more than 80% by volume.

The non-aqueous electrolyte energy storage device described in [3] above has a more appropriate content of the fluorinated cyclic ether and has a smaller overvoltage, and occurrence of an internal short circuit is more suppressed.

[4] In the non-aqueous electrolyte energy storage device described in any one of [1] to [3] above, a molar ratio of the electrolyte salt to the ionic liquid may be not less than 0.8 and not more than 6.5.

The non-aqueous electrolyte energy storage device described in [4] above has an appropriate molar ratio of the ionic liquid to the electrolyte salt and has a smaller overvoltage, and occurrence of an internal short circuit is more suppressed.

[5] In the non-aqueous electrolyte energy storage device described in any one of [1] to [4] above, the non-aqueous solvent may further contain at least one selected from the group consisting of a non-fluorinated cyclic ether and a chain ether.

In the non-aqueous electrolyte energy storage device described in [5] above, the non-aqueous solvent further contains at least one selected from the group consisting of a non-fluorinated cyclic ether and a chain ether, whereby the viscosity of the non-aqueous electrolyte is further reduced. Therefore, the non-aqueous electrolyte energy storage device described in [5] above can exhibit further effects such as high-rate discharge performance, in addition to having a small overvoltage and suppressed occurrence of an internal short circuit.

[6] In the non-aqueous electrolyte energy storage device described in [5] above, the total content of the non-fluorinated cyclic ether and the chain ether with respect to the total of the ionic liquid and the non-aqueous solvent may be not less than 5% by volume and not more than 80% by volume.

The non-aqueous electrolyte energy storage device described in [6] above has an appropriate total content of the non-fluorinated cyclic ether and the chain ether, and the advantage of containing at least one selected from the group consisting of the non-fluorinated cyclic ether and the chain ether can be particularly sufficiently obtained.

[7] In the non-aqueous electrolyte energy storage device described in any one of [1] to [6] above, the fluorinated cyclic ether may be represented by the following formula (1). 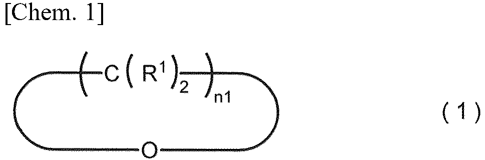 (In formula (1), each R¹ is independently a hydrogen atom, a fluorine atom, an alkyl group having carbon atoms of not less than 1 and not more than 4, or a fluorinated alkyl group having carbon atoms of not less than 1 and not more than 4. Provided that at least one of a plurality of R¹ is a fluorine atom or a fluorinated alkyl group having carbon atoms of not less than 1 and not more than 4. n1 is 4 or 5.)

[8] In the non-aqueous electrolyte energy storage device described in any one of [5] to [7] above, the non-fluorinated cyclic ether may be represented by the following formula (2), and the chain ether may be represented by the following formula (3).

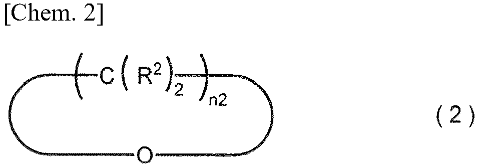

(In formula (2), each R² is independently a hydrogen atom or an alkyl group having carbon atoms of not less than 1 and not more than 4. n2 is 4 or 5.)

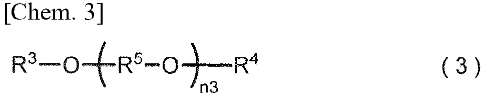

(In formula (3), each of R³ and R⁴ is independently an alkyl group having carbon atoms of not less than 1 and not more than 3 or a fluorinated alkyl group having carbon atoms of not less than 1 and not more than 3. R⁵ is an alkanediyl group having carbon atoms of not less than 1 and not more than 3. n3 is 0 or 1.)

[9] In the non-aqueous electrolyte energy storage device described in any one of [1] to [8] above, the ionic liquid may have at least one selected from the group consisting of a quaternary ammonium cation, an imidazolium-based cation, a pyrrolidinium-based cation, a piperidinium-based cation, a quaternary phosphonium cation, and a sulfonium cation.
[10] In the non-aqueous electrolyte energy storage device described in any one of [1] to [9] above, the ionic liquid may have an imide anion.
[11] In the non-aqueous electrolyte energy storage device described in any one of [1] to [10] above, the electrolyte salt may be an imide salt.
[12] In the non-aqueous electrolyte energy storage device described in any one of [1] to [11] above, the content of the ionic liquid with respect to the total of the ionic liquid and the non-aqueous solvent may be not less than 5% by volume and not more than 95% by volume.
[13] In the non-aqueous electrolyte energy storage device described in any one of [1] to [12] above, the total content of the ionic liquid and the fluorinated cyclic ether with respect to the total of the ionic liquid and the non-aqueous solvent may be not less than 20% by volume and not more than 100% by volume.
[14] In the non-aqueous electrolyte energy storage device described in any one of [1] to [13] above, the total content of the ionic liquid and the fluorinated cyclic ether with respect to the total of the ionic liquid and the non-aqueous solvent may be not less than 95% by volume and not more than 100% by volume, and the content of the fluorinated cyclic ether may be not less than 5% by volume and not more than 35% by volume.
[15] In the non-aqueous electrolyte energy storage device described in any one of [1] to [14] above, the total content of the ionic liquid and the ether (the total of the fluorinated cyclic ether, the non-fluorinated cyclic ether, and the chain ether) with respect to the total of the ionic liquid and the non-aqueous solvent may be not less than 90% by volume and not more than 100% by volume.
[16] In the non-aqueous electrolyte energy storage device described in any one of [1] to [15] above, the viscosity of the non-aqueous electrolyte at 25 °C may be not more than 143 mPa·s.

Each of the non-aqueous electrolyte energy storage devices described in [7] to [16] above is a preferred embodiment of the present invention, and has a smaller overvoltage, and occurrence of an internal short circuit is more suppressed.

The viscosity of the non-aqueous electrolyte is defined as a value measured using "LOVIS2000ME" manufactured by Anton Paar GmbH as the measuring device.

[17] The non-aqueous electrolyte according to another aspect of the present invention includes an electrolyte salt, an ionic liquid, and a non-aqueous solvent, wherein the non-aqueous solvent contains a fluorinated cyclic ether, and the electrolyte salt has a molality of not less than 0.8 mol/kg and not more than 3.5 mol/kg.

The non-aqueous electrolyte described in [17] above is a non-aqueous electrolyte using an ionic liquid, and is capable of reducing the overvoltage of a non-aqueous electrolyte energy storage device and suppressing occurrence of an internal short circuit accompanying repeated charging and discharging. Furthermore, the non-aqueous electrolyte described in [17] above can also suppress an increase in the overvoltage accompanying repeated charging and discharging of the non-aqueous electrolyte energy storage device.

[18] The non-aqueous electrolyte described in [17] above may be used for a non-aqueous electrolyte energy storage device including a negative electrode containing metallic lithium at least in a charged state.

The non-aqueous electrolyte described in [18] above can be particularly suitably used for a non-aqueous electrolyte energy storage device including a negative electrode containing metallic lithium at least in a charged state.

[19] A method for manufacturing a non-aqueous electrolyte energy storage device according to another aspect of the present invention includes: preparing a negative electrode containing metallic lithium at least in a charged state; and preparing a non-aqueous electrolyte containing an electrolyte salt, an ionic liquid, and a non-aqueous solvent, wherein the non-aqueous solvent contains a fluorinated cyclic ether, and a molality of the electrolyte salt in the non-aqueous electrolyte is not less than 0.8 mol/kg and not more than 3.5 mol/kg.

According to the method for manufacturing a non-aqueous electrolyte energy storage device described in [19] above, it is possible to manufacture a non-aqueous electrolyte energy storage device in which an ionic liquid is used in a non-aqueous electrolyte, which has a small overvoltage, and in which occurrence of an internal short circuit accompanying repeated charging and discharging is also suppressed. In addition, in the non-aqueous electrolyte energy storage device obtained by the method for manufacturing the non-aqueous electrolyte energy storage device described in [19] above, an increase in overvoltage accompanying repeated charging and discharging is also suppressed.

The non-aqueous electrolyte energy storage device according to one embodiment of the present invention, the non-aqueous electrolyte, the method for manufacturing the non-aqueous electrolyte energy storage device, the energy storage apparatus, and other embodiments will be described in detail below.

### <Non-Aqueous Electrolyte Energy Storage Device>

A non-aqueous electrolyte energy storage device according to one embodiment of the present invention includes a positive electrode, a negative electrode, a non-aqueous electrolyte, and a container for housing them. The non-aqueous electrolyte energy storage device may further include a separator that is interposed between the positive electrode and the negative electrode to electrically insulate the positive electrode from the negative electrode. The positive electrode, the negative electrode, and an optional separator usually constitute an electrode body. At least a part of the non-aqueous electrolyte is usually present in a state of being impregnated into the electrode body. The non-aqueous electrolyte energy storage device according to one embodiment of the present invention may further include other members.

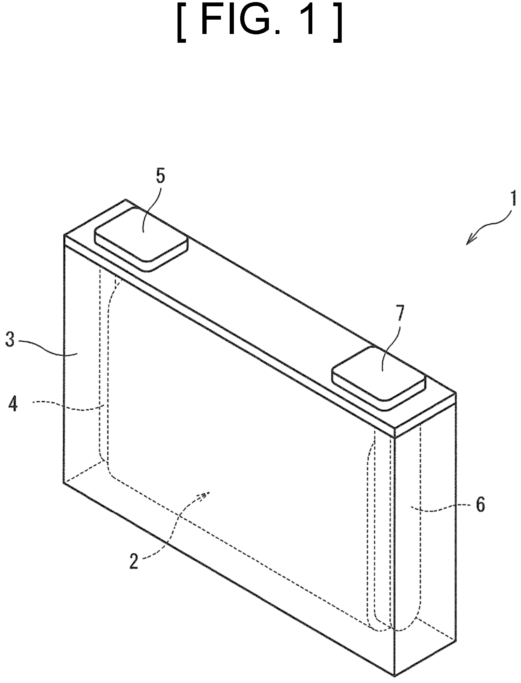

For example, a non-aqueous electrolyte energy storage device 1 according to one embodiment of the present invention and illustrated in FIG. 1 includes an electrode body 2, a non-aqueous electrolyte (not illustrated), and a rectangular parallelepiped-shaped container 3 for housing them. The non-aqueous electrolyte energy storage device 1 of FIG. 1 further includes a positive electrode lead 4, a positive electrode external terminal 5, a negative electrode lead 6, and a negative electrode external terminal 7. The positive electrode lead 4 and the negative electrode lead 6 are housed in the container 3 together with the electrode body 2 and the like. The positive electrode external terminal 5 and the negative electrode external terminal 7 are provided outside the container 3. The positive electrode constituting the electrode body 2 is electrically connected to the positive electrode external terminal 5 via the positive electrode lead 4. The negative electrode constituting the electrode body 2 is electrically connected to the negative electrode external terminal 7 via the negative electrode lead 6.

The non-aqueous electrolyte energy storage device of the present invention may be a non-aqueous electrolyte secondary battery. Hereinafter, main members and the like constituting the non-aqueous electrolyte energy storage device according to one embodiment of the present invention will be described in detail, focusing on a case where the non-aqueous electrolyte energy storage device is a non-aqueous electrolyte secondary battery (particularly a lithium-ion secondary battery), but this is not intended to limit the subject matter to which the present invention is applied.

Note that both the lower limit and the upper limit of each numerical range described in the embodiments of the present invention can be arbitrarily combined (provided that the upper limit is larger than the lower limit). Unless otherwise specifically stated with respect to the lower limit and the upper limit in each numerical range, such numerical range means that the lower limit and the upper limit are included therein. That is, the lower limit "is A" means A or more. Similarly, the upper limit "is B" means B or less.

### (Positive Electrode)

The positive electrode has a positive electrode substrate and a positive electrode active material layer laminated directly on the positive electrode substrate or laminated thereon via an intermediate layer. Usually, the positive electrode has a part where the positive electrode substrate is exposed. The part where the positive electrode substrate is exposed is usually connected to the positive electrode lead described above. The positive electrode may have, for example, a shape such as a sheet, a plate, or a strip.

The thickness of the positive electrode is appropriately set according to the application and the like of the non-aqueous electrolyte energy storage device. The average thickness of the positive electrode may be, for example, not less than 30 µm and not more than 1,000 µm. The lower limit of the average thickness of the positive electrode may be 50 µm, 100 µm, or 200 µm. The upper limit of the average thickness of the positive electrode may be 500 µm, 400 µm, 300 µm, 200 µm, or 100 µm. The average thickness of the positive electrode is an average thickness of a part where the positive electrode active material layer is laminated directly on the positive electrode substrate or laminated thereon via an intermediate layer; and when both a part where the positive electrode active material layer is laminated on both sides of the positive electrode substrate and a part where the positive electrode active material layer is laminated on only one side of the positive electrode substrate are present, the average thickness of the positive electrode is the average thickness of the part where the positive electrode active material layer is laminated on both sides of the positive electrode substrate. In the present specification, "average thickness" means an average value of thicknesses measured at five arbitrary points.

The positive electrode substrate has conductivity. In the present specification, "having conductivity" means that the volume resistivity is not more than 10⁻² Ω·cm. The volume resistivity is defined as a value measured in accordance with JIS-H-0505 (1975). On the other hand, in the present specification, "having no conductivity" or "having (electrical) insulating properties" means that the above volume resistivity is not less than 10⁷ Ω·cm.

Examples of the material for the positive electrode substrate include metals such as aluminum, titanium, iron, and alloys thereof (such as stainless steel). Among these, aluminum or an aluminum alloy is preferable from the viewpoints of electric potential resistance, high electronic conductivity, and cost.

The positive electrode substrate has, for example, a shape such as a sheet, a plate, or a strip. Examples of the form of the positive electrode substrate include a foil, a vapor-deposited film, a mesh, a porous material, and the like, and a foil is preferable. The positive electrode substrate may be, for example, an aluminum foil or an aluminum alloy foil.

The average thickness of the positive electrode substrate may be, for example, not less than 3 µm and not more than 50 µm. The lower limit of the average thickness of the positive electrode substrate may be 5 µm, 8 µm, 10 µm, or 15 µm. The upper limit of the average thickness of the positive electrode substrate may be 40 µm, 30 µm, 20 µm, or 15 µm.

The intermediate layer is a layer arranged between the positive electrode substrate and the positive electrode active material layer. The intermediate layer contains, for example, a conductive agent and a binder. When the intermediate layer contains a conductive agent, the contact resistance between the positive electrode substrate and the positive electrode active material layer can be reduced. Examples of the conductive agent and the binder used for the intermediate layer include the same materials as those used for the positive electrode active material layer described below.

The positive electrode active material layer contains a positive electrode active material. The positive electrode active material layer contains, as necessary, optional components such as a conductive agent, a binder, a thickener, and a filler. The positive electrode active material layer may be formed from a positive electrode mixture containing a positive electrode active material and other optional components. The positive electrode active material layer may be provided only on one side, or may be provided on both sides, of a positive electrode substrate having, for example, a shape such as a sheet.

As the positive electrode active material, a known positive electrode active material can be used. As the positive electrode active material for a lithium-ion secondary battery, a material capable of occluding and releasing lithium ions is usually used. Examples of the positive electrode active material include a lithium transition metal composite oxide, a polyanion compound, a chalcogen compound, a sulfur-based active material, lithium oxide, and the like. As the positive electrode active material, one type or two or more types can be used.

Examples of the transition metal element contained in the lithium transition metal composite oxide include a nickel element, a cobalt element, a manganese element, and the like. The lithium transition metal composite oxide may contain a typical metal element such as an aluminum element. Examples of the lithium transition metal composite oxide include a lithium transition metal composite oxide having an α-NaFeO₂-type crystal structure, a lithium transition metal composite oxide having a spinel-type crystal structure, and the like.

Examples of the lithium transition metal composite oxide having an α-NaFeO₂-type crystal structure include those represented by Li_{1+α}Ma_{1-α}O₂ (wherein Ma is a metal element other than a lithium element, including one or more transition metal elements, and 0 ≤ α < 1). Ma preferably contains one type or two or more types of Ni, Co, and Mn. The total content of Ni, Co, and Mn with respect to Ma ((Ni + Co + Mn)/Ma) is preferably not less than 90 mol%, and more preferably not less than 98 mol%.

Examples of the lithium transition metal composite oxide having a spinel-type crystal structure include those represented by Li_{β}Mb₂O₄ (wherein Mb is a metal element other than a lithium element, including one or more transition metal elements, and 0 < β ≤ 1.2). Mb preferably contains Mn. The content of Mn relative to Mb (Mn/Mb) is preferably not less than 50 mol%, and more preferably not less than 80 mol%.

A polyanion compound is a compound composed of a polyanion (that is, a polyvalent oxoacid anion) and a cation. The polyanion compound preferably contains a lithium cation and a transition metal cation as the cations. Examples of the Polyanion compound include LiFePO₄, LiMnPO₄, LiMnₓFe₁₋ₓPO₄ (0 < x < 1), LiNiPO₄, LiCoPO₄, Li₃V₂(PO₄)₃, Li₂MnSiO₄, Li₂CoPO₄F, and the like. The surfaces of the particles of the polyanion compound may be coated with another material (for example, a carbon material described below).

Examples of the chalcogen compound include titanium disulfide, molybdenum disulfide, molybdenum dioxide, and the like.

In one embodiment of the present invention, the positive electrode active material may include a sulfur-based active material. The positive electrode active material may be a sulfur-based active material. The sulfur-based active material may be elemental sulfur, a sulfur compound, or a mixture thereof. Examples of the sulfur compound include metal sulfides such as lithium sulfide, organic sulfur compounds such as organic disulfide compounds and carbon sulfide compounds, and the like. The sulfur-based active material has advantages such as a high theoretical capacity and low cost. In particular, a non-aqueous electrolyte energy storage device having a positive electrode containing a sulfur-based active material and a negative electrode containing metallic lithium at least in a charged state is prone to occurrence of an internal short circuit accompanying repeated charging and discharging, and has a great tendency to be unable to sufficiently and repeatedly perform favorable charging and discharging. Therefore, when the technique of the present invention is applied to such a non-aqueous electrolyte energy storage device, the advantage that the overvoltage is reduced and occurrence of an internal short circuit is also suppressed can be obtained particularly remarkably.

The sulfur-based active material may be in the form of a composite with a conductive agent (a material having higher conductivity than the sulfur-based active material) or the like. Examples of the composite include one in which the sulfur-based active material is supported on the conductive agent or the like as a support, and specific examples thereof include a composite of sulfur and porous carbon (sulfur-porous carbon composite: SPC) and the like.

The atoms or the polyanions in these materials as the positive electrode active material may be partially substituted with atoms or anion species made of other elements. The surfaces of these materials may be coated with other materials.

The positive electrode active material is usually particulate. The average particle size of the positive electrode active material is preferably, for example, not less than 0.1 µm and not more than 20 µm. When the average particle size of the positive electrode active material is set to be not less than the lower limit, production or handling of the positive electrode active material is facilitated. When the average particle size of the positive electrode active material is set to be not more than the upper limit, the electron conductivity of the positive electrode active material layer is improved. When a composite of the positive electrode active material and another material is used, the average particle size of the composite is defined as the average particle size of the positive electrode active material. The term "average particle size" means a value (D50) at which the volume-based cumulative distribution calculated in accordance with JIS-Z-8819-2 (2001) is 50%, based on the particle size distribution measured by the laser diffraction-scattering method for a diluted liquid obtained by diluting the particles with a solvent in accordance with JIS-Z-8825 (2013). As a method for obtaining particles of the positive electrode active material and the negative electrode active material described below with a predetermined particle size, a known method using a pulverizer, a classifier, or the like can be employed.

The content of the positive electrode active material in the positive electrode active material layer is preferably not less than 50 % by mass and not more than 99 % by mass, more preferably not less than 70 % by mass and not more than 98 % by mass, and may be not less than 80 % by mass and not more than 95 % by mass. When the content of the positive electrode active material is set to be within the above range, both high energy density and productivity of the positive electrode active material layer can be achieved.

The conductive agent is usually a component made of a material having conductivity. Even when the volume resistivity of the conductive agent cannot be directly measured, a component made of a material known to have a volume resistivity of not more than 10⁻² Ω·cm is regarded as a conductive agent. Examples of the conductive agent include carbon materials, metals, conductive ceramics, and the like. The carbon material refers to a material having a carbon element as a main constituent element. The main constituent element refers to an element having the largest content on a mass basis. For example, the proportion of the carbon element in the carbon material may be not less than 80% by mass, not less than 90% by mass, or may be 95% by mass, 99% by mass, or not less than 99.9% by mass. The carbon material is preferably a carbon material other than a polymer compound that has not been carbonized. Examples of the carbon material include graphite, non-graphitic carbon, graphene-based carbon, and the like. Examples of non-graphitic carbon include carbon nanofibers, pitch-based carbon fibers, carbon black, and the like. Examples of carbon black include furnace black, acetylene black, Ketjen black, and the like. Examples of graphene-based carbon include graphene, carbon nanotubes (CNT), fullerenes, and the like. Examples of the shape of the conductive agent include a powdery form, a fibrous form, and the like. As the conductive agent, one type or two or more types can be used. As the conductive agent, these materials may be used in composite form. For example, a material in which carbon black and CNT are combined may be used.

The content of the conductive agent in the positive electrode active material layer is preferably not less than 0.1% by mass and not more than 10% by mass, more preferably not less than 1% by mass and not more than 9% by mass, and still more preferably not less than 3% by mass and not more than 8% by mass. The upper limit of the content of the conductive agent may be 5% by mass, 4% by mass, or 3% by mass. By setting the content of the conductive agent within the above range, an increase in the energy density of the non-aqueous electrolyte energy storage device and the like can be achieved. When a composite of the positive electrode active material and the conductive agent is used as the positive electrode active material, the content of the conductive agent in the composite is not included in the content of the conductive agent in the positive electrode active material layer.

Examples of the binder include water-based binders, organic solvent-based binders, and the like.

A water-based binder is a binder that dissolves or disperses in water. The water-based binder may be a binder that dissolves or disperses in 100 parts by mass of water at 20 °C in an amount of not less than 1 part by mass. When the positive electrode active material layer is formed using a positive electrode mixture paste in which the dispersion medium is water or a mixed solvent mainly composed of water, a water-based binder (a water-soluble or water-dispersible polymer material) can be used. Examples of the water-based binder include polyethylene oxide, polypropylene oxide, polyvinyl alcohol, polyacrylic acid, polymethacrylic acid, polytetrafluoroethylene, styrene-butadiene rubber, polyethylene, polypropylene, nitrile-butadiene rubber, cellulose, and the like.

An organic solvent-based binder is a binder that dissolves or disperses in an organic solvent (for example, N-methylpyrrolidone). The organic solvent-based binder may be a binder that dissolves or disperses in 100 parts by mass of an organic solvent (for example, N-methylpyrrolidone) at 20 °C in an amount of not less than 1 part by mass. When the positive electrode active material layer is formed using a positive electrode mixture paste in which the dispersion medium is an organic solvent or a mixed solvent mainly composed of an organic solvent, an organic solvent-based binder (a polymer material having solubility or dispersibility in an organic solvent) can be used. Examples of the organic solvent-based binder include polyvinylidene fluoride, a copolymer of vinylidene fluoride and hexafluoropropylene, a copolymer of ethylene and vinyl alcohol, polyacrylonitrile, polyphosphazene, polysiloxane, polyvinyl acetate, polymethyl methacrylate, polystyrene, polycarbonate, polyamide, polyimide, polyamide-imide, a crosslinked polymer of cellulose and chitosan pyrrolidone carboxylate, a derivative of chitosan, and the like.

The binder may be a fluororesin (polytetrafluoroethylene, polyvinylidene fluoride, etc.), a polyolefin (polyethylene, polypropylene, etc.), an elastomer (ethylene-propylene-diene rubber, styrene-butadiene rubber, fluororubber, etc.), a polysaccharide polymer (cellulose, a derivative of chitosan, etc.), or the like. As the binder, one type or two or more types can be used.

The content of the binder in the positive electrode active material layer is preferably not less than 0.1% by mass and not more than 10% by mass, more preferably not less than 1% by mass and not more than 9% by mass, and still more preferably not less than 2% by mass and not more than 8% by mass. The upper limit of the content of the binder may be 5% by mass, 4% by mass, or 3% by mass. By setting the content of the binder within the above range, stable retention of the positive electrode active material and the like can be achieved. The technique disclosed herein can also be implemented in an embodiment in which the positive electrode active material layer does not contain a binder.

Examples of the thickener include polysaccharide polymers such as carboxymethyl cellulose and methyl cellulose. When the thickener has a functional group that reacts with lithium or the like, the functional group may be deactivated in advance by methylation or the like. The thickener may function as a binder. One type or two or more types of thickeners can be used. When the positive electrode active material layer contains a thickener, the content of the thickener in the positive electrode active material layer is preferably not less than 0.1% by mass and not more than 8% by mass, more preferably not more than 5% by mass, and still more preferably not more than 2% by mass. The technique disclosed herein can also be implemented in an embodiment in which the positive electrode active material layer does not contain a thickener.

The filler is not particularly limited. The filler is a component other than the positive electrode active material, the conductive agent, the binder, and the thickener, and may be a component that is intentionally contained. The filler may be contained as a component for filling gaps in the positive electrode active material layer, or may be contained for another application. The filler may be an organic substance such as polyolefin, or may be an inorganic substance such as an inorganic oxide, a hydroxide, or a carbonate. As the filler, one type or two or more types can be used. When the positive electrode active material layer contains a filler, the content of the filler in the positive electrode active material layer can be not less than 0.1% by mass and not more than 8% by mass, and is usually preferably not more than 5% by mass, more preferably not more than 2% by mass. The technique disclosed herein can also be implemented in an embodiment in which the positive electrode active material layer does not contain a filler.

The positive electrode active material layer may further contain components other than the positive electrode active material, the conductive agent, the binder, the thickener, and the filler. The other components include those unintentionally generated in the positive electrode active material layer. Further, the positive electrode active material layer may contain, as the other components, impurities unintentionally contained therein, as long as the effects of the present invention are achieved. The upper limit of the content of the other components in the positive electrode active material layer may be 10% by mass, or may be 5% by mass, 2% by mass, 1% by mass, 0.1% by mass, or 0.01% by mass. The upper limit of the content of the components unintentionally generated in the positive electrode active material layer may be 10% by mass, or may be 5% by mass, 2% by mass, 1% by mass, 0.1% by mass, or 0.01% by mass. The upper limit of the content of the unintentionally contained impurities in the positive electrode active material layer may be 10% by mass, or may be 5% by mass, 2% by mass, 1% by mass, 0.1% by mass, or 0.01% by mass.

The thickness and the like of the positive electrode active material layer are appropriately set according to the type of the positive electrode active material, the application and the like of the non-aqueous electrolyte energy storage device, and the like. The average thickness of one positive electrode active material layer may be, for example, not less than 5 µm and not more than 1,000 µm. The lower limit of the average thickness of one positive electrode active material layer may be 10 µm, 20 µm, 30 µm, 40 µm, 50 µm, 60 µm, or 100 µm. The upper limit of the average thickness of one positive electrode active material layer may be 800 µm, 500 µm, 200 µm, 100 µm, 80 µm, 60 µm, or 40 µm. The mass per unit area of one positive electrode active material layer may be, for example, not less than 4 mg/cm² and not more than 100 mg/cm². The lower limit of the mass per unit area of one positive electrode active material layer may be 6 mg/cm², 8 mg/cm², or 10 mg/cm². The upper limit of the mass per unit area of one positive electrode active material layer may be 50 mg/cm², 20 mg/cm², 15 mg/cm², 12 mg/cm², or 10 mg/cm².

The porosity of the positive electrode active material layer may be, for example, not less than 20% and not more than 50%. The lower limit of the porosity of the positive electrode active material layer may be 25%, 30%, or 35%. The upper limit of the porosity of the positive electrode active material layer may be 45%, 40%, or 35%. The "porosity (%)" of the positive electrode active material layer and a negative electrode active material layer described below is determined by the formula (1 - V₂/V₁) × 100, where V₁ is the apparent volume (volume including voids) of the positive (negative) electrode active material layer, and V₂ is the sum of the actual volumes of the materials constituting the positive (negative) electrode active material layer. The sum V₂ of the actual volumes of the materials constituting the positive (negative) electrode active material layer can be calculated from the content of each material in the positive (negative) electrode active material layer and the true density of each material.

### (Method for Manufacturing Positive Electrode)

The positive electrode can be produced by a known method. The production of the positive electrode can be performed, for example, by applying a paste-like positive electrode mixture (positive electrode mixture paste) directly to the positive electrode substrate or via an intermediate layer and drying it to form a positive electrode active material layer. The positive electrode mixture paste usually contains a positive electrode active material, other optional components, and a dispersion medium. After drying, pressing or the like may be performed on the positive electrode active material layer.

### (Negative Electrode)

The negative electrode has a negative electrode substrate and a negative electrode active material layer laminated directly on the negative electrode substrate or laminated thereon via an intermediate layer. Usually, the negative electrode has a part where the negative electrode substrate is exposed. The part where the negative electrode substrate is exposed is usually connected to the negative electrode lead described above. The negative electrode may have a shape such as, for example, a sheet, a plate, or a strip.

The thickness of the negative electrode is appropriately set according to the application and the like of the non-aqueous electrolyte energy storage device. The average thickness of the negative electrode may be, for example, not less than 30 µm and not more than 1,000 µm. The lower limit of the average thickness of the negative electrode may be 50 µm, 100 µm, or 200 µm. The upper limit of the average thickness of the negative electrode may be 500 µm, 400 µm, 300 µm, 200 µm, or 100 µm. The average thickness of the negative electrode is an average thickness of a part where the negative electrode active material layer is laminated directly on the negative electrode substrate or laminated thereon via an intermediate layer; and when both a part where the negative electrode active material layer is laminated on both sides of the negative electrode substrate and a part where the negative electrode active material layer is laminated on only one side of the negative electrode substrate are present, the average thickness of the negative electrode is the average thickness of the part where the negative electrode active material layer is laminated on both sides of the negative electrode substrate.

The negative electrode substrate has conductivity. Examples of the material for the negative electrode substrate include metals such as copper, nickel, iron, and alloys thereof (such as stainless steel), carbon materials, and the like. Among these, nickel or a nickel alloy is preferable.

The negative electrode substrate has a shape such as, for example, a sheet, a plate, or a strip. Examples of the form of the negative electrode substrate include a foil, a vapor-deposited film, a mesh, a porous material, and the like, and a foil is preferable. The negative electrode substrate may be, for example, a nickel foil or a nickel alloy foil.

The average thickness of the negative electrode substrate may be, for example, not less than 2 µm and not more than 35 µm. The lower limit of the average thickness of the negative electrode substrate may be 3 µm, 4 µm, 5 µm, or 10 µm. The upper limit of the average thickness of the negative electrode substrate may be 30 µm, 20 µm, 15 µm, or 10 µm.

The configuration of the intermediate layer of the negative electrode is not particularly limited, and it can be selected, for example, from the configurations exemplified for the intermediate layer of the positive electrode.

The negative electrode active material layer contains a negative electrode active material. The negative electrode active material layer contains, as necessary, optional components such as a conductive agent, a binder, a thickener, and a filler. The optional components such as a conductive agent, a binder, a thickener, and a filler can be selected from the materials exemplified for the positive electrode. The negative electrode active material layer may be formed from a negative electrode mixture containing a negative electrode active material and other optional components. The negative electrode active material layer may be provided on only one side or on both sides of a negative electrode substrate having a shape such as a sheet, for example.

As the negative electrode active material, metallic lithium is used. In other words, the negative electrode or the negative electrode active material layer contains metallic lithium at least in a charged state. The negative electrode or the negative electrode active material layer preferably contains metallic lithium in all states including a charged state and a discharged state.

In the case of a non-aqueous electrolyte energy storage device configured such that metallic lithium is deposited on at least a part of the surface of the negative electrode during charging, and substantially all of the metallic lithium on the surface of the negative electrode is eluted into the non-aqueous electrolyte during discharging, the negative electrode may have no negative electrode active material layer in a discharged state.

The metallic lithium may be pure metallic lithium consisting essentially only of the lithium element, or may be a lithium alloy containing other metal elements. Examples of the lithium alloy include a lithium-silver alloy, a lithium-zinc alloy, a lithium-calcium alloy, a lithium-aluminum alloy, a lithium-magnesium alloy, a lithium-indium alloy, and the like. The lithium alloy may contain a plurality of metal elements other than the lithium element.

The negative electrode active material layer is preferably a layer consisting essentially only of metallic lithium (pure metallic lithium or a lithium alloy). The lower limit of the content of the lithium element in the negative electrode active material layer is preferably 80% by mass, more preferably 90% by mass, and still more preferably 99% by mass. The upper limit of the content of the lithium element in the negative electrode active material layer may be 100% by mass.

As the negative electrode active material, another negative electrode active material may be used together with metallic lithium. Examples of the other negative electrode active material include conventionally known materials. However, it is preferable to use substantially only metallic lithium as the negative electrode active material. The lower limit of the content of the lithium element with respect to all negative electrode active materials contained in the negative electrode active material layer is preferably 80% by mass, more preferably 90% by mass, and still more preferably 99% by mass. The upper limit of the content of the lithium element with respect to all negative electrode active materials contained in the negative electrode active material layer may be 100% by mass.

When the negative electrode active material layer contains a conductive agent, the content of the conductive agent in the negative electrode active material layer is preferably not less than 1% by mass and not more than 10% by mass, and more preferably not less than 3% by mass and not more than 9% by mass. The content of the conductive agent in the negative electrode active material layer may be not more than 5% by mass, or may be not more than 2% by mass. The technique disclosed herein can also be implemented in an embodiment in which the negative electrode active material layer does not contain a conductive agent.

When the negative electrode active material layer contains a binder, the content of the binder in the negative electrode active material layer is preferably not less than 0.1% by mass and not more than 10% by mass, and more preferably not less than 0.5% by mass and not more than 8% by mass. The content of the binder in the negative electrode active material layer may be not more than 5% by mass, or may be not more than 2% by mass. The technique disclosed herein can also be implemented in an embodiment in which the negative electrode active material layer does not contain a binder.

When the negative electrode active material layer includes a thickener, the content of the thickener in the negative electrode active material layer is preferably not less than 0.1% by mass and not more than 10% by mass, and more preferably not less than 0.5% by mass and not more than 8% by mass. The content of the thickener in the negative electrode active material layer may be not more than 5% by mass, or may be not more than 2% by mass. The technique disclosed herein can also be implemented in an embodiment in which the negative electrode active material layer does not contain a thickener.

The filler in the negative electrode active material layer may be a component other than the negative electrode active material, the conductive agent, the binder, and the thickener, and may be a component that is intentionally contained. The filler may be contained as a component for filling gaps in the negative electrode active material layer, or may be contained for another application. When the negative electrode active material layer includes a filler, the content of the filler in the negative electrode active material layer can be not less than 0.1% by mass and not more than 8% by mass, and usually, not more than 5% by mass is preferable, and not more than 2% by mass is more preferable. The technique disclosed herein can also be implemented in an embodiment in which the negative electrode active material layer does not contain a filler.

The negative electrode active material layer may further contain components other than the negative electrode active material, the conductive agent, the binder, the thickener, and the filler. The other components include those generated unintentionally in the negative electrode active material layer. Further, the negative electrode active material layer may contain unintentionally contained impurities as the other components as long as the effect of the present invention is exerted. The upper limit of the content of the other components in the negative electrode active material layer may be 10% by mass, or may be 5% by mass, 2% by mass, 1% by mass, 0.1% by mass, or 0.01% by mass. The upper limit of the content of the components unintentionally generated in the negative electrode active material layer may be 10% by mass, or may be 5% by mass, 2% by mass, 1% by mass, 0.1% by mass, or 0.01% by mass. The upper limit of the content of the unintentionally contained impurities in the negative electrode active material layer may be 10% by mass, or may be 5% by mass, 2% by mass, 1% by mass, 0.1% by mass, or 0.01% by mass.

The negative electrode active material layer may be a non-porous layer (a solid layer) or a porous layer, but is preferably a non-porous layer. The negative electrode active material layer may be a layer of metallic lithium. The negative electrode active material layer may be in the form of a foil or may be a layer made of a metallic lithium foil (a pure metallic lithium foil or a lithium alloy foil). The average thickness of the negative electrode active material layer in the charged state may be, for example, not less than 5 µm and not more than 2,000 µm. The lower limit of the average thickness of one negative electrode active material layer in the charged state may be 10 µm, 20 µm, 30 µm, 50 µm, 100 µm, 200 µm, 300 µm, 400 µm, or 600 µm. The upper limit of the average thickness of one negative electrode active material layer in the charged state may be 1,500 µm, 1,200 µm, 800 µm, or 600 µm.

### (Method for Manufacturing Negative Electrode)

The negative electrode can be manufactured by a known method. The negative electrode can be manufactured, for example, by laminating a metallic lithium foil directly on the negative electrode substrate or via an intermediate layer thereon, and pressing or the like. The negative electrode can also be manufactured by, in the same manner as in the above-described method for manufacturing the positive electrode, applying a paste-like negative electrode mixture (negative electrode mixture paste) directly on the negative electrode substrate or via an intermediate layer thereon and drying the mixture to form the negative electrode active material layer.

In the case of a non-aqueous electrolyte energy storage device configured such that metallic lithium is deposited on at least a part of the surface of the negative electrode during charging, and substantially all of the metallic lithium on the surface of the negative electrode is eluted into the non-aqueous electrolyte during discharging, the negative electrode to be manufactured may not be provided with a negative electrode active material layer. That is, the negative electrode to be manufactured may be a negative electrode having a surface region where metallic lithium can be deposited during charging.

### (Separator)

A known separator can be used as the separator. As the separator, for example, a separator consisting only of a substrate layer, a separator in which an inorganic layer containing inorganic particles and a binder is formed on one or both surfaces of a substrate layer, or the like, can be used.

Examples of the form of the substrate layer of the separator include a woven fabric, a non-woven fabric, a porous resin film, and the like. Among these forms, a porous resin film is preferable from the viewpoint of strength and the like, and a non-woven fabric is preferable from the viewpoint of liquid retention properties of the non-aqueous electrolyte and the like. The material for the substrate layer of the separator is not particularly limited as long as it has insulating properties, but resins such as polyolefin (polyethylene, polypropylene, etc.), polyimide, and aramid are preferable.

Examples of inorganic compounds constituting the inorganic particles include oxides such as iron oxide, silicon oxide, aluminum oxide, titanium oxide, zirconium oxide, calcium oxide, and magnesium oxide; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon; substances derived from mineral resources, such as talc, zeolite, kaolin, bentonite, and mica, or artificial products thereof; and the like. As the inorganic particles, one type or two or more types can be used. The average particle size of the inorganic particles is preferably, for example, not less than 0.5 µm and not more than 10 µm. The content of the inorganic particles in the inorganic layer is preferably not less than 50% by mass and not more than 99% by mass, and more preferably not less than 80% by mass and not more than 98% by mass.

Examples of the binder used for the inorganic layer include the same binders as those exemplified for the positive electrode active material layer.

The porosity of the separator may be, for example, not less than 20% and not more than 80%. The lower limit of the porosity of the separator may be 30%, 40%, or 50% from the viewpoint of discharge performance and the like. The upper limit of the porosity of the separator may be 70%, 60%, or 50% from the viewpoint of strength and the like. In the present specification, "porosity" is a volume-based value, and means a value measured by a mercury porosimeter.

The average thickness of the separator may be, for example, not less than 10 µm and not more than 40 µm, or may be not less than 15 µm and not more than 30 µm.

As the separator, a polymer gel composed of a polymer and a non-aqueous electrolyte may be used. As the separator, a porous resin film, a non-woven fabric, or the like as described above, and a polymer gel may be used in combination.

### (Electrode Body)

As the electrode body, those having a known structure, such as a wound-type electrode body and a stacked-type electrode body, can be adopted.

The wound-type electrode body has a structure in which a positive electrode and a negative electrode are wound in an insulated state. The wound-type electrode body may be cylindrical (columnar) or flat. The electrode body 2 provided in the non-aqueous electrolyte energy storage device 1 of FIG. 1 is a flat wound-type electrode body. The wound-type electrode body can be produced, for example, by the following procedure. First, a positive electrode, a separator, and a negative electrode each formed in a strip shape are overlapped to obtain a stacked body. By winding this stacked body, a wound-type electrode body is obtained.

The stacked-type electrode body has a structure in which one or a plurality of positive electrodes and one or a plurality of negative electrodes are stacked in an insulated state. For example, a stacked-type electrode body can be obtained by stacking a positive electrode, a separator, and a negative electrode each formed in a rectangular shape.

In addition, as the electrode body, for example, one having a structure in which at least one of a positive electrode or a negative electrode is folded in a bellows shape and stacked can also be adopted.

### (Non-Aqueous Electrolyte)

The non-aqueous electrolyte is a medium that serves as a medium for transport of charge transport ions (for example, lithium ions) between a positive electrode and a negative electrode, and refers to one that does not substantially contain water. The water content in the non-aqueous electrolyte may be, for example, not more than 10,000 ppm, not more than 5,000 ppm, not more than 1,000 ppm, not more than 500 ppm, or not more than 100 ppm, and is preferably not more than 50 ppm, and more preferably not more than 20 ppm. The non-aqueous electrolyte contains an electrolyte salt, an ionic liquid, and a non-aqueous solvent. The non-aqueous solvent may be a non-ionic compound. The non-aqueous electrolyte may be a non-aqueous electrolyte solution. In one embodiment of the present invention, the non-aqueous electrolyte energy storage device may be a non-aqueous electrolyte solution energy storage device.

The electrolyte salt refers to an ionic compound in which the cation is a charge transport ion and which is in a solid state at normal temperature (20 °C) at 1 atm. A known electrolyte salt can be used as the electrolyte salt. Examples of the electrolyte salt include a lithium salt, a sodium salt, a potassium salt, a magnesium salt, an onium salt, and the like. Among these, a lithium salt is preferable. As the electrolyte salt, one type or two or more types can be used.

Examples of anions constituting the electrolyte salt include imide anions such as N(CF₃SO₂)₂⁻(bis(trifluoromethanesulfonyl)imide anion: TFSI⁻), N(SO₂F)₂⁻ (bis(fluorosulfonyl)imide anion: FSI⁻), N(C₂F₅SO₂)₂⁻ (bis(pentafluoroethanesulfonyl)imide anion), N(C₄F₉SO₂)₂⁻ (bis(nonafluorobutanesulfonyl)imide anion), N(POF₂)₂⁻(bis(difluorophosphonyl)imide anion), N(CF₃SO₂)(CF₃CO)⁻ ((trifluoromethanesulfonyl)(trifluoromethanecarbonyl)imide anion), N(CN)₂⁻ (dicyanoimide anion), CF₃-SO₂-N-SO₂-N-SO₂CF₃⁻, FSO₂-N-SO₂-C₄F₉⁻, CF₃-SO₂-N-SO₂-C₄F₉⁻, CF₃-SO₂-N-SO₂-CF₂-SO₂-N-SO₂-CF₃²⁻, CF₃-SO₂-N-SO₂-CF₂-SO₃²⁻, and CF₃-SO₂-N-SO₂-CF₂-SO₂-C(-SO₂CF₃)₂²⁻. As anions constituting the electrolyte salt, anions other than imide anions, such as PF₆⁻, PO₂F₂⁻, BF₄⁻, ClO₄⁻, NO₂⁻, NO₃⁻, I⁻, SO₃CF₃⁻, C(SO₂CF₃)₃⁻, and C(SO₂C₂F₅)₃⁻, can also be used.

As the anion constituting the electrolyte salt, an imide anion is preferable; at least one selected from the group consisting of a bis(trifluoromethanesulfonyl)imide anion (TFSI⁻) and a bis(fluorosulfonyl)imide anion (FSI⁻) is more preferable; and a bis(fluorosulfonyl)imide anion (FSI⁻) is further preferable. That is, as the electrolyte salt, an imide salt is preferable; at least one selected from the group consisting of lithium bis(trifluoromethanesulfonyl)imide (LiTFSI) and lithium bis(fluorosulfonyl)imide (LiFSI) is more preferable; and lithium bis(fluorosulfonyl)imide (LiFSI) is further preferable. Further, the anion constituting the electrolyte salt preferably has a fluorine atom. When the anion constituting the electrolyte salt is such an anion, the ionic conductivity of the non-aqueous electrolyte is increased, whereby further reduction of the overvoltage of the non-aqueous electrolyte energy storage device, further suppression of occurrence of an internal short circuit accompanying repeated charging and discharging, and the like can be achieved. As the anion constituting the electrolyte salt, one type or two or more types can be used.

The molality of the electrolyte salt in the non-aqueous electrolyte is not less than 0.8 mol/kg and not more than 3.5 mol/kg. With the molality of the electrolyte salt being within the above range, the ionic conductivity and the like of the non-aqueous electrolyte are optimized, whereby reduction of the overvoltage of the non-aqueous electrolyte energy storage device, suppression of occurrence of an internal short circuit accompanying repeated charging and discharging, and the like can be achieved. The lower limit of the molality of the electrolyte salt is preferably 1.0 mol/kg, more preferably 1.2 mol/kg, still more preferably 1.5 mol/kg, and may be 2.0 mol/kg, 2.5 mol/kg, or 3.0 mol/kg. The upper limit of the molality of the electrolyte salt is preferably 3.2 mol/kg, more preferably 3.0 mol/kg, and may be 2.5 mol/kg, 2.0 mol/kg, 1.5 mol/kg, or 1.0 mol/kg.

The molar ratio of the electrolyte salt to the ionic liquid (electrolyte salt/ionic liquid) is preferably not less than 0.8 and not more than 6.5. With the molar ratio (electrolyte salt/ionic liquid) being within the above range, the ionic conductivity and the like of the non-aqueous electrolyte are optimized, whereby reduction of the overvoltage of the non-aqueous electrolyte energy storage device, suppression of occurrence of an internal short circuit accompanying repeated charging and discharging, and the like can be achieved. The lower limit of the molar ratio (electrolyte salt/ionic liquid) is more preferably 0.80, and may be 0.82, 0.98, 1.04, 1.05, 1.36, 1.43, 1.46, 1.53, 1.63, 1.64, 1.93, 1.96, 2.15, 2.25, 3.00, 4.00, 5.00, 6.00, or 6.21. The upper limit of the molar ratio (electrolyte salt/ionic liquid) is more preferably 6.21, and may be 5.00, 4.00, 3.00, 2.25, 2.15, 1.96, 1.93, 1.64, 1.63, 1.53, 1.46, 1.43, 1.36, 1.05, 1.04, 0.98, or 0.82.

The ionic liquid refers to an ionic compound, at least a part of which is in a liquid state at normal temperature (20 °C) at 1 atm.

Examples of the cation constituting the ionic liquid include a quaternary ammonium cation, an imidazolium-based cation, a pyrrolidinium-based cation, a piperidinium-based cation, a pyridinium-based cation, a pyrrolium-based cation, a pyrazolium-based cation, a pyrrolinium-based cation, a quaternary phosphonium cation, a sulfonium cation, and the like.

Examples of the quaternary ammonium-based cation include tetraalkylammonium-based cations such as a trimethylethylammonium cation, a trimethylpropylammonium cation, a trimethylbutylammonium cation, a trimethylhexylammonium cation, and a tetrapentylammonium cation.

Examples of the imidazolium-based cation include a 1,3-dimethylimidazolium cation, a 1-ethyl-3-methylimidazolium cation, a 1,3-diethylimidazolium cation, a 1-butyl-3-methylimidazolium cation, a 1,2,3-trimethylimidazolium cation, a 1,2-dimethyl-3-ethylimidazolium cation, a 1,2-dimethyl-3-propylimidazolium cation, a 1-butyl-2,3-dimethylimidazolium cation, and the like.

Examples of the pyrrolidinium-based cation include a 1,1-dimethylpyrrolidinium cation, a 1-ethyl-1-methylpyrrolidinium cation, a 1-methyl-1-propylpyrrolidinium cation, a 1-butyl-1-methylpyrrolidinium cation, and the like.

Examples of the piperidinium-based cation include a 1,1-dimethylpiperidinium cation, a 1-ethyl-1-methylpiperidinium cation, a 1-methyl-1-propylpiperidinium cation, a 1-butyl-1-methylpiperidinium cation, and the like.

Examples of the pyridinium-based cation include a 1-methylpyridinium cation, a 1-ethylpyridinium cation, a 1-propylpyridinium cation, a 1-butylpyridinium cation, a 1-ethyl-2-methylpyridinium cation, a 1-butyl-4-methylpyridinium cation, a 1-butyl-2,4-dimethylpyridinium cation, and the like.

Examples of the pyrrolium-based cation include a 1,1-dimethylpyrrolium cation, a 1-ethyl-1-methylpyrrolium cation, a 1-methyl-1-propylpyrrolium cation, a 1-butyl-1-methylpyrrolium cation, and the like.

Examples of the pyrazolium-based cation include a 1,2-dimethylpyrazolium cation, a 1-ethyl-2-methylpyrazolium cation, a 1-propyl-2-methylpyrazolium cation, a 1-butyl-2-methylpyrazolium cation, and the like.

Examples of the pyrrolinium-based cation include a 1,2-dimethylpyrrolinium cation, a 1-ethyl-2-methylpyrrolinium cation, a 1-propyl-2-methylpyrrolinium cation, a 1-butyl-2-methylpyrrolinium cation, and the like.

Examples of the quaternary phosphonium cation include a tetramethylphosphonium cation, a tetraethylphosphonium cation, a trimethylethylphosphonium cation, a trimethylpropylphosphonium cation, a trimethylbutylphosphonium cation, a tetraphenylphosphonium cation, a trimethylmethoxymethylphosphonium cation, and the like.

Examples of the sulfonium cation include a trimethylsulfonium cation, a triethylsulfonium cation, a tributylsulfonium cation, and the like.

The cation constituting the ionic liquid is preferably at least one selected from the group consisting of a quaternary ammonium cation, an imidazolium-based cation, a pyrrolidinium-based cation, a piperidinium-based cation, a quaternary phosphonium cation, and a sulfonium cation; more preferably at least one selected from the group consisting of an imidazolium-based cation, a pyrrolidinium-based cation, and a piperidinium-based cation; still more preferably at least one selected from the group consisting of an imidazolium-based cation and a pyrrolidinium-based cation; and even still more preferably an imidazolium-based cation. When the cation constituting the ionic liquid is such a cation, further reduction of the overvoltage of the non-aqueous electrolyte energy storage device, further suppression of occurrence of an internal short circuit accompanying repeated charging and discharging, and the like can be achieved. One type or two or more types of these cations may be included.

Examples of the anion constituting the ionic liquid include those similar to the anions exemplified as the anion constituting the electrolyte salt. As the anion constituting the ionic liquid, an imide anion is preferable, at least one selected from the group consisting of a bis(trifluoromethanesulfonyl)imide anion (TFSI⁻) and a bis(fluorosulfonyl)imide anion (FSI⁻) is more preferable; and a bis(fluorosulfonyl)imide anion (FSI⁻) is further preferable. Further, the anion constituting the ionic liquid preferably has a fluorine atom. When the anion constituting the ionic liquid is such an anion, further reduction of the overvoltage of the non-aqueous electrolyte energy storage device, further suppression of occurrence of an internal short circuit accompanying repeated charging and discharging, and the like can be achieved. One type or two or more types of these anions may be included.

It is preferable that at least one of the electrolyte salt or the ionic liquid has a bis(fluorosulfonyl)imide anion (FSI⁻) as an anion. Further, it is preferable that a bis(fluorosulfonyl)imide anion (FSI⁻) is included as an anion in the non-aqueous electrolyte. In such a case, further reduction of the overvoltage of the non-aqueous electrolyte energy storage device, further suppression of occurrence of an internal short circuit accompanying repeated charging and discharging, and the like can be achieved.

Further, the anion present in the non-aqueous electrolyte is preferably substantially only an imide anion, and more preferably substantially only at least one selected from the group consisting of a bis(trifluoromethanesulfonyl)imide anion (TFSI⁻) and a bis(fluorosulfonyl)imide anion (FSI⁻). For example, the proportion of these anions with respect to all anions in the non-aqueous electrolyte is preferably not less than 90 mol%, more preferably not less than 99 mol%, and still more preferably not less than 99.9 mol%. By configuring the anion in the non-aqueous electrolyte in such a manner, the ionic conductivity of the non-aqueous electrolyte is increased, whereby further reduction of the overvoltage of the non-aqueous electrolyte energy storage device, further suppression of occurrence of an internal short circuit accompanying repeated charging and discharging, and the like can be achieved.

The lower limit of the content of the ionic liquid with respect to the total of the ionic liquid and the non-aqueous solvent is preferably 5% by volume, more preferably 10% by volume, and may be 20% by volume, 24% by volume, 30% by volume, 36% by volume, 40% by volume, 50% by volume, 59% by volume, 60% by volume, 70% by volume, 80% by volume, or 90% by volume. The upper limit of the content is preferably 90% by volume, and may be 80% by volume, 70% by volume, 60% by volume, 59% by volume, 50% by volume, 40% by volume, 36% by volume, 30% by volume, 24% by volume, 20% by volume, or 10% by volume. As the content of the ionic liquid increases, occurrence of an internal short circuit accompanying repeated charging and discharging of the non-aqueous electrolyte energy storage device tends to be further suppressed.

The non-aqueous solvent contains a fluorinated cyclic ether. The fluorinated cyclic ether refers to an ether having a fluorine element and a cyclic structure. The fluorinated cyclic ether may be composed of only a carbon element, a hydrogen element, an oxygen element, and a fluorine element. It is preferable that the oxygen element possessed by the fluorinated cyclic ether is only an oxygen element constituting an ether bond. That is, it is preferable that the fluorinated cyclic ether does not have an oxygen element-containing substituent such as a hydroxy group or a carboxy group. The fluorinated cyclic ether may be any of a monoether (a compound having only one ether bond), a diether (a compound having two ether bonds), a triether (a compound having three ether bonds), and the like, but is preferably a monoether. The fluorinated cyclic ether preferably has an ether bond in the cyclic structure. The fluorinated cyclic ether is preferably a saturated ether. A saturated ether refers to an ether having no unsaturated bond between carbon atoms (a carbon-carbon double bond and a carbon-carbon triple bond).

The lower limit of the number of ring members in the ring structure of the fluorinated cyclic ether is preferably 4, and more preferably 5. The upper limit of the above number of ring members is preferably 8, more preferably 7, still more preferably 6, and even still more preferably 5. The lower limit of the number of carbon atoms in the fluorinated cyclic ether is preferably 3, and more preferably 4. The upper limit of the above number of carbon atoms is preferably 7, more preferably 6, still more preferably 5, and even still more preferably 4. The lower limit of the number of fluorine atoms in the fluorinated cyclic ether is preferably 2, more preferably 3, and still more preferably 4. The upper limit of the above number of fluorine atoms is preferably 10, more preferably 8, still more preferably 6, and even still more preferably 4.

The fluorinated cyclic ether is preferably represented by the following formula (1).

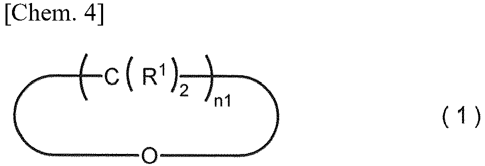

(In formula (1), each R¹ is independently a hydrogen atom, a fluorine atom, an alkyl group having carbon atoms of not less than 1 and not more than 4, or a fluorinated alkyl group having carbon atoms of not less than 1 and not more than 4. Provided that at least one of the plurality of R¹ is a fluorine atom or a fluorinated alkyl group having carbon atoms of not less than 1 and not more than 4. n1 is 4 or 5.)

When R¹ in formula (1) above is an alkyl group or a fluorinated alkyl group, the number of carbon atoms is preferably not more than 3, and more preferably not more than 2. Each R¹ in formula (1) above is independently a hydrogen atom or a fluorine atom, and at least one of R¹ is preferably a fluorine atom. n1 is preferably 4.

The fluorinated cyclic ether may be, for example, 3,3,4,4-tetrafluorotetrahydrofuran, 2,2,3,4,5,5-hexafluorotetrahydrofuran, 2,2,3,3,4,5,5-heptafluorotetrahydrofuran, 2,2,3,3,4,4,5-heptafluorotetrahydrofuran, octafluorooxolane, perfluoro(2-butyltetrahydrofuran), perfluorotetrahydropyran, or perfluoropropyltetrahydropyran. As the fluorinated cyclic ether, one type or two or more types can be used.

The lower limit of the content of the fluorinated cyclic ether with respect to the total of the ionic liquid and the non-aqueous solvent is preferably 5% by volume, and more preferably 10% by volume. By setting the content to be at or above the lower limit, further reduction of the overvoltage, further suppression of occurrence of an internal short circuit accompanying repeated charging and discharging, and the like can be achieved. The lower limit of the content may be 20% by volume, 30% by volume, 40% by volume, 41% by volume, 50% by volume, 60% by volume, 64% by volume, 70% by volume, or 76% by volume. The upper limit of the content is preferably 95% by volume, more preferably 80% by volume, and still more preferably 76% by volume. By setting the content to be at or below the upper limit, further reduction of the overvoltage and further suppression of occurrence of an internal short circuit accompanying repeated charging and discharging, and the like can be achieved. The upper limit of the content may be 70% by volume, 64% by volume, 60% by volume, 50% by volume, 41% by volume, 40% by volume, 35% by volume, 30% by volume, 20% by volume, or 10% by volume.

The lower limit of the total content of the ionic liquid and the fluorinated cyclic ether, with respect to the total of the ionic liquid and the non-aqueous solvent, is preferably 20% by volume, more preferably 30% by volume, and still more preferably 40% by volume. By setting the total content to be at or above the lower limit, further reduction of the overvoltage of the non-aqueous electrolyte energy storage device, further suppression of occurrence of an internal short circuit accompanying repeated charging and discharging, and the like can be achieved. The lower limit of the total content may be 50% by volume, 60% by volume, 70% by volume, 80% by volume, 90% by volume, or 95% by volume. The upper limit of the total content may be 100% by volume, or may be 95% by volume, 90% by volume, 80% by volume, 70% by volume, 60% by volume, 50% by volume, or 40% by volume.

In one embodiment of the present invention, the total content of the ionic liquid and the fluorinated cyclic ether with respect to the total of the ionic liquid and the non-aqueous solvent may be not less than 95% by volume and not more than 100% by volume, and the content of the fluorinated cyclic ether may be not less than 5% by volume and not more than 35% by volume. When the non-aqueous electrolyte has such a composition, occurrence of an internal short circuit accompanying repeated charging and discharging of the non-aqueous electrolyte energy storage device can be particularly sufficiently suppressed.

The non-aqueous solvent may contain another solvent other than the fluorinated cyclic ether. The other solvent is preferably an ether other than the fluorinated cyclic ether. In one embodiment of the present invention, the non-aqueous solvent may further contain at least one selected from the group consisting of a non-fluorinated cyclic ether and a chain ether.

The non-fluorinated cyclic ether may be a cyclic ether composed only of the carbon element, the hydrogen element, and the oxygen element. It is preferable that the oxygen element possessed by the non-fluorinated cyclic ether is only an oxygen element constituting an ether bond. That is, it is preferable that the non-fluorinated cyclic ether does not have an oxygen element-containing substituent such as a hydroxy group or a carboxy group. The non-fluorinated cyclic ether may be any of a monoether, a diether, a triether, and the like, but is preferably a monoether. The non-fluorinated cyclic ether preferably has an ether bond in the cyclic structure. The non-fluorinated cyclic ether is preferably a saturated ether.

The lower limit of the number of ring members in the ring structure of the non-fluorinated cyclic ether is preferably 4, and more preferably 5. The upper limit of the above number of ring members is preferably 8, more preferably 7, and still more preferably 6. The lower limit of the number of carbon atoms in the non-fluorinated cyclic ether is preferably 3, and more preferably 4. The upper limit of the above number of carbon atoms is preferably 7, more preferably 6, and still more preferably 5.

The non-fluorinated cyclic ether is preferably represented by the following formula (2).

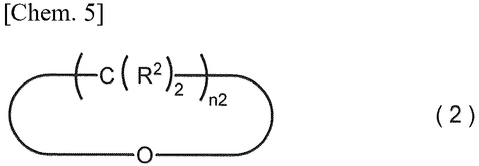

(In formula (2), each R² is independently a hydrogen atom or an alkyl group having carbon atoms of not less than 1 and not more than 4. n2 is 4 or 5.)

When R² in formula (2) above is an alkyl group, the number of carbon atoms is preferably not more than 3, and more preferably not more than 2. R² in formula (2) above is preferably a hydrogen atom.

Examples of the non-fluorinated cyclic ether include tetrahydrofuran, tetrahydropyran, and the like. As the non-fluorinated cyclic ether, one type or two or more types can be used.

The lower limit of the content of the non-fluorinated cyclic ether with respect to the total of the ionic liquid and the non-aqueous solvent may be 5% by volume, 10% by volume, 20% by volume, 30% by volume, 40% by volume, 50% by volume, or 60% by volume. The upper limit of the content may be 80% by volume, 70% by volume, 60% by volume, 50% by volume, 40% by volume, 30% by volume, 20% by volume, or 10% by volume.

The chain ether may be a fluorinated chain ether or a non-fluorinated chain ether. The chain ether may be composed of only carbon, hydrogen, and oxygen elements, or may be composed only of carbon, hydrogen, and oxygen, and fluorine elements. It is preferable that the oxygen element possessed by the chain ether is only an oxygen element constituting an ether bond. That is, it is preferable that the chain ether does not have an oxygen element-containing substituent such as a hydroxy group or a carboxy group. The chain ether may be any of a monoether, a diether, a triether, and the like, but is preferably a monoether or a diether. The chain ether may be a fluorinated chain diether. The chain ether is preferably a saturated ether.

The lower limit of the number of carbon atoms in the chain ether is preferably 3, more preferably 4, and still more preferably 5. The upper limit of the above number of carbon atoms is preferably 8, more preferably 7, and still more preferably 6. The lower limit of the number of fluorine atoms in the chain ether may be 0, and may be 1, 2, 3, 4, 5, or 6. The upper limit of the number of fluorine atoms is preferably 10, and may be 9, 8, 7, 6, 5, 4, or 3.

The chain ether is preferably represented by the following formula (3).

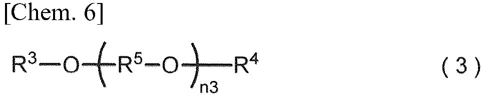

(In formula (3), each of R³ and R⁴ is independently an alkyl group having carbon atoms of not less than 1 and not more than 3 or a fluorinated alkyl group having carbon atoms of not less than 1 and not more than 3. R⁵ is an alkanediyl group having carbon atoms of not less than 1 and not more than 3. n3 is 0 or 1.)

R⁵ in formula (3) above is preferably -(CH₂)ₘ- (m is an integer of 1 to 3), and more preferably -CH₂CH₂-.

Examples of the chain ether include 2-(2,2,2-trifluoroethoxy)ethyl methyl ether, ethyl-2-(2,2,2-trifluoroethoxy)ethyl ether, 2-(2,2-difluoroethoxy)ethyl methyl ether, ethyl-2-(2,2-difluoroethoxy)ethyl ether, 2-(2-fluoroethoxy)ethyl methyl ether, ethyl-2-(2-fluoroethoxy)ethyl ether, 1,1,2,2-tetrafluoroethyl-2,2,3,3-tetrafluoropropyl ether, bis(2,2,2-trifluoroethyl) ether, ethyl propyl ether, and the like. As the chain ether, one type or two or more types can be used.

The lower limit of the content of the chain ether with respect to the total of the ionic liquid and the non-aqueous solvent may be 5% by volume, 10% by volume, or 20% by volume. The upper limit of the content may be 80% by volume, 70% by volume, 60% by volume, 50% by volume, 40% by volume, 30% by volume, 20% by volume, or 10% by volume.

The lower limit of the total content of the non-fluorinated cyclic ether and the chain ether with respect to the total of the ionic liquid and the non-aqueous solvent may be 5% by volume, or may be 10% by volume, 20% by volume, 30% by volume, 40% by volume, 50% by volume, or 60% by volume. The upper limit of the total content may be 80% by volume, or may be 70% by volume, 60% by volume, 50% by volume, 40% by volume, 30% by volume, 20% by volume, or 10% by volume.

The non-aqueous solvent may further contain another non-aqueous solvent other than the fluorinated cyclic ether, the non-fluorinated cyclic ether, and the chain ether (that is, ether). Examples of other non-aqueous solvents include cyclic carbonates, chain carbonates, ethers, carboxylic acid esters, phosphate esters, amides, nitriles, and the like. However, it is preferable that the non-aqueous solvent is substantially composed only of ether. The content of ether (the total of fluorinated cyclic ether, the non-fluorinated cyclic ether, and the chain ether) in the non-aqueous solvent may be not less than 90% by volume, or may be not less than 95% by volume or not less than 99% by volume. As described above, when the non-aqueous solvent is mainly composed of ether, the overvoltage of the non-aqueous electrolyte energy storage device tends to be further reduced, and occurrence of an internal short circuit also tends to be further suppressed.

The total content of the ionic liquid and the ether (the total of the fluorinated cyclic ether, the non-fluorinated cyclic ether, and the chain ether) with respect to the total of the ionic liquid and the non-aqueous solvent may be not less than 90% by volume, or may be not less than 95% by volume or not less than 99% by volume. The upper limit of the above total content may be 100% by volume.

The total content of the ionic liquid and the ether (the total of the fluorinated cyclic ether, the non-fluorinated cyclic ether, and the chain ether) with respect to all the components other than the electrolyte salt in the non-aqueous electrolyte may be not less than 90% by volume, or may be not less than 95% by volume or not less than 99% by volume. As described above, when the non-aqueous electrolyte is mainly composed of the electrolyte salt, the ionic liquid, and the ether as the non-aqueous solvent, the overvoltage of the non-aqueous electrolyte energy storage device tends to be further reduced, and occurrence of an internal short circuit also tends to be further suppressed. The upper limit of the above total content may be 100% by volume.

The non-aqueous electrolyte may contain other components in addition to the electrolyte salt, the ionic liquid, and the non-aqueous solvent. Examples of the other components include additives and the like.

As the additive, one type or two or more types can be used. When an additive is used in the non-aqueous electrolyte, the content of the additive in the non-aqueous electrolyte is preferably not less than 0.01% by mass and not more than 10% by mass, more preferably not less than 0.1% by mass and not more than 7% by mass, still more preferably not less than 0.2% by mass and not more than 5% by mass, and particularly preferably not less than 0.3% by mass and not more than 3% by mass.

The upper limit of the viscosity of the non-aqueous electrolyte at 25 °C is preferably 143 mPa·s, and more preferably 141.6 mPa·s. With the viscosity of the non-aqueous electrolyte being at or below the upper limit, the overvoltage of the non-aqueous electrolyte energy storage device tends to be further reduced, and occurrence of an internal short circuit also tends to be further suppressed. The upper limit of the viscosity may be 139.4 mPa·s, 119.7 mPa·s, 65.9 mPa·s, 57.2 mPa·s, or 48.0 mPa·s. The lower limit of the viscosity may be, for example, 10 mPa·s, or may be 20 mPa·s, 30 mPa·s, 40 mPa·s, or 48.0 mPa·s.

The lower limit of the ionic conductivity of the non-aqueous electrolyte at 25 °C is preferably 1.0 mS/cm, more preferably 1.5 mS/cm, and may be 1.7 mS/cm, 1.9 mS/cm, or 2.0 mS/cm. With the ionic conductivity of the non-aqueous electrolyte being at or above the lower limit, the overvoltage of the non-aqueous electrolyte energy storage device tends to be further reduced, and occurrence of an internal short circuit also tends to be further suppressed. The upper limit of the ionic conductivity may be, for example, 10 mS/cm, and may be 8 mS/cm, 6 mS/cm, or 5 mS/cm.

The ionic conductivity is defined as a value measured using "VMP-300" manufactured by Biologic as the measurement device.

### (Container)

The container houses the electrode body and the non-aqueous electrolyte in an internal space. As the material of the container, a metal material such as aluminum or stainless steel, a resin material, or the like is used, and a metal material is preferable from the viewpoint of strength and the like. A composite material of a metal material and a resin material, or the like, can also be used.

The shape of the container is not particularly limited, but may be cylindrical, rectangular parallelepiped (prismatic), disk-shaped, or the like. The container may have a shape such as a sheet formed of a metal-resin composite film.

### (Shape, Application, etc. of Non-Aqueous Electrolyte Energy Storage Device)

The shape of the non-aqueous electrolyte energy storage device according to one embodiment of the present invention is not particularly limited. The non-aqueous electrolyte energy storage device may be, for example, a cylindrical battery, a prismatic battery, a flat battery, a coin-type battery, a button-type battery, or the like.

The application of the non-aqueous electrolyte energy storage device according to one embodiment of the present invention is not particularly limited. The non-aqueous electrolyte energy storage device can be used for, for example, power supplies for automobiles such as electric vehicles, hybrid vehicles, and plug-in hybrid vehicles, power supplies for electronic devices such as personal computers and communication terminals, and power supplies for power storage.

The non-aqueous electrolyte energy storage device of the present invention is used singly or in a plurality of units. The non-aqueous electrolyte energy storage device may be used singly when the required output and the required voltage are low. On the other hand, when at least one of the required output or the required voltage is large, the non-aqueous electrolyte energy storage device may be used as an energy storage apparatus combined with other non-aqueous electrolyte energy storage devices. In an energy storage apparatus in which a plurality of non-aqueous electrolyte energy storage devices are combined, at least one non-aqueous electrolyte energy storage device included in the energy storage apparatus may be the non-aqueous electrolyte energy storage device according to one embodiment of the present invention. The energy storage apparatus will be described in detail below.

The non-aqueous electrolyte energy storage device according to one embodiment of the present invention may be constrained, for example, such that the container maintains a certain thickness, or may be unconstrained. Further, it may be constrained such that a constant load is applied to the container. When the container is constrained, expansion of the container accompanying a charge-discharge cycle or the like is suppressed, and a decrease in charge-discharge performance may be suppressed. When the container is constrained, a load may or may not be applied to the electrode body in the container. For example, the non-aqueous electrolyte energy storage device or the energy storage apparatus may be provided with a constraint member that performs such constraint.

### <Nonaqueous Electrolyte>

The non-aqueous electrolyte according to one embodiment of the present invention includes an electrolyte salt, an ionic liquid, and a non-aqueous solvent, wherein the non-aqueous solvent contains a fluorinated cyclic ether, and the molality of the electrolyte salt is not less than 0.8 mol/kg and not more than 3.5 mol/kg.

The non-aqueous electrolyte according to one embodiment of the present invention is a non-aqueous electrolyte using an ionic liquid, and is capable of reducing the overvoltage of a non-aqueous electrolyte energy storage device and suppressing occurrence of an internal short circuit accompanying repeated charging and discharging. The specific form and preferred form of the non-aqueous electrolyte according to one embodiment of the present invention are the same as the specific form and preferred form of the non-aqueous electrolyte described above as the non-aqueous electrolyte used in the non-aqueous electrolyte energy storage device according to an embodiment of the present invention. However, the application of the non-aqueous electrolyte according to one embodiment of the present invention is not particularly limited. The non-aqueous electrolyte is preferably used for a non-aqueous electrolyte energy storage device, and more preferably used for a non-aqueous electrolyte energy storage device including a negative electrode containing metallic lithium at least in a charged state.

The non-aqueous electrolyte according to one embodiment of the present invention can be prepared by mixing the components.

### <Method for Manufacturing Non-Aqueous Electrolyte Energy Storage Device>

A non-aqueous electrolyte energy storage device according to one embodiment of the present invention can be manufactured by a known method. A method for manufacturing a non-aqueous electrolyte energy storage device according to one embodiment of the present invention includes preparing a negative electrode containing metallic lithium at least in a charged state, and preparing a non-aqueous electrolyte containing an electrolyte salt, an ionic liquid, and a non-aqueous solvent, wherein the non-aqueous solvent contains a fluorinated cyclic ether, and the molality of the electrolyte salt in the non-aqueous electrolyte is not less than 0.8 mol/kg and not more than 3.5 mol/kg. The manufacturing method may further include preparing a positive electrode, preparing a separator, manufacturing an electrode body using the positive electrode, the negative electrode, and the separator, housing the positive electrode, the negative electrode, and the non-aqueous electrolyte in a container, and the like. Housing the positive electrode, the negative electrode, and the non-aqueous electrolyte in a container may be housing the electrode body, and the non-aqueous electrolyte in the container.

Preparing the positive electrode may be manufacturing the positive electrode. The manufacture of the positive electrode can be performed by the method described above. Preparing the negative electrode may be manufacturing the negative electrode. The manufacture of the negative electrode can be performed by the method described above. Examples of the negative electrode to be prepared include a negative electrode having metallic lithium, or a negative electrode having a surface region where metallic lithium can be deposited during charging. The negative electrode having a surface region on which metallic lithium can be deposited during charging may be, for example, a negative electrode composed only of the negative electrode substrate. When preparing a negative electrode having a surface region on which metallic lithium can be deposited during charging, a positive electrode having a positive electrode active material containing lithium ions is prepared in advance as the positive electrode. Preparing the non-aqueous electrolyte may be formulating the non-aqueous electrolyte. Specific forms and preferred forms of the positive electrode, the negative electrode, the non-aqueous electrolyte, and the like to be prepared are the same as the specific forms and preferred forms of the positive electrode, the negative electrode, the non-aqueous electrolyte, and the like provided in the non-aqueous electrolyte energy storage device according to one embodiment of the present invention described above. The positive electrode, the negative electrode, the separator, the non-aqueous electrolyte, and the like may be prepared by purchase or the like.

Housing the electrode body (or the positive electrode and the negative electrode) and the non-aqueous electrolyte in a container can be performed by a known method. When the non-aqueous electrolyte is a non-aqueous electrolyte solution, for example, the housing can be performed by first housing the electrode body (or the positive electrode and the negative electrode) in the container and then injecting the non-aqueous electrolyte solution from an injection port provided in the container. The injection port is sealed after injection of the non-aqueous electrolyte solution. The method for manufacturing the non-aqueous electrolyte energy storage device may further include performing initial charge and discharge on the assembled, uncharged and undischarged energy storage device.

The non-aqueous electrolyte energy storage device according to one embodiment of the present invention may be manufactured by other methods.

### <Energy Storage Apparatus>

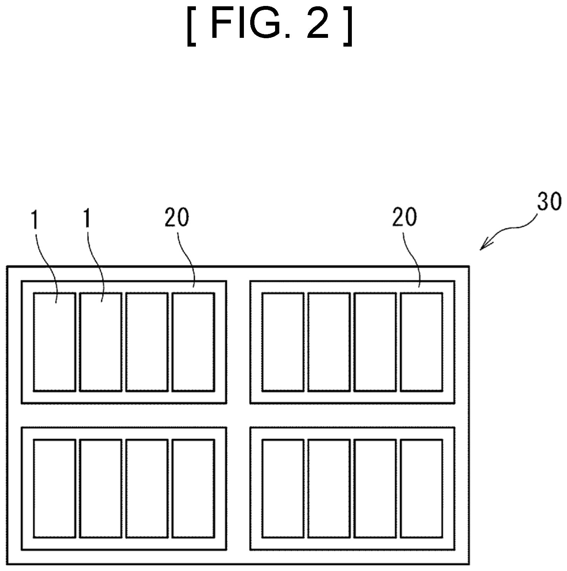

An energy storage apparatus 30 in FIG. 2 includes a plurality of energy storage units 20. Each energy storage unit 20 includes a plurality of non-aqueous electrolyte energy storage devices 1 electrically connected to each other. The energy storage apparatus 30 may include a bus bar (not illustrated) for electrically connecting a plurality of non-aqueous electrolyte energy storage devices 1, a bus bar (not illustrated) for electrically connecting a plurality of energy storage units 20, and the like. The energy storage unit 20 or the energy storage apparatus 30 may include a state monitoring device (not illustrated) for monitoring the state of one or more non-aqueous electrolyte energy storage devices 1.

### <Other Embodiments>

The non-aqueous electrolyte energy storage device, the non-aqueous electrolyte, and the method for manufacturing the non-aqueous electrolyte energy storage device of the present invention are not limited to the above-described embodiments, and various modifications may be made without departing from the spirit of the present invention. For example, the configuration of one embodiment can be added to a configuration of another embodiment, and a part of the configuration of one embodiment can be replaced with a configuration of another embodiment or a well-known art. Furthermore, a part of the configuration of one embodiment can be deleted. In addition, a well-known art can be added to the configuration of one embodiment.

In the above embodiment, a case where the non-aqueous electrolyte energy storage device is used as a non-aqueous electrolyte secondary battery capable of being charged and discharged has been described, but the type, shape, dimensions, capacity, and the like of the non-aqueous electrolyte energy storage device are arbitrary. The present invention can also be applied to various secondary batteries and capacitors such as electric double-layer capacitors and lithium-ion capacitors.

In the above embodiment, an electrode body in which a separator is interposed between a positive electrode and a negative electrode has been described, but the electrode body may not be provided with a separator. For example, the positive electrode and the negative electrode may be in direct contact in a state in which a layer having no conductivity is formed on the active material layer of the positive electrode or the negative electrode. As described above, the positive electrode and the negative electrode may further have a layer other than the substrate, the intermediate layer, and the active material layer. Further, the positive electrode and the negative electrode may not have a layered structure.

### Examples

Hereinafter, the present invention will be described more specifically by way of Examples, but the present invention is not limited to the following Examples.

Components used for preparation of the non-aqueous electrolytes of Examples and Comparative Examples are shown below.

### (Electrolyte Salt)

LiFSI: lithium bis(fluorosulfonyl)imide
(Ionic Liquid)
Py13FSI: 1-methyl-1-propylpyrrolidinium bis(fluorosulfonyl)imide
EMIFSI: 1-ethyl-3-methylimidazolium bis(fluorosulfonyl)imide
(Non-Aqueous Solvent)
TFTHF: 3,3,4,4-tetrafluorotetrahydrofuran
THF: tetrahydrofuran
THP: tetrahydropyran
EPE: ethyl propyl ether
TFETFPE: 1,1,2,2-tetrafluoroethyl-2,2,3,3-tetrafluoropropyl ether
BTFEE: bis(2,2,2-trifluoroethyl) ether
TFEME: 2-(2,2,2-trifluoroethoxy)ethyl methyl ether
EA: ethyl acetate
TFEA: 2,2,2-trifluoroethyl acetate

### [Example 1]

### (Preparation of Non-Aqueous Electrolyte)

Py13FSI, which is an ionic liquid, and TFTHF, which is a non-aqueous solvent, were mixed at a volume ratio of 24:76, and LiFSI, which is an electrolyte salt, was contained in the resulting liquid at a molality of 1.00 mol/kg to prepare a non-aqueous electrolyte.

### (Preparation of Test Cell)

As a pair of electrodes, two pure metallic lithium foils were prepared. In addition, as a separator, a separator in which an inorganic particle layer was laminated on both surfaces of a polyethylene microporous film was prepared. A test cell (Li symmetric cell) of Example 1 was produced using the prepared non-aqueous electrolyte, and the prepared pair of electrodes and separator.

### [Examples 2 to 18 and Comparative Examples 1 to 10]

Test cells of Examples 2 to 18 and Comparative Examples 1 to 10 were obtained in the same manner as in Example 1 except that the composition of the non-aqueous electrolyte was as shown in Table 1. The content of each of the ionic liquid, the fluorinated cyclic ether, and the other non-aqueous solvent in Table 1 is the content with respect to the total of the ionic liquid and the non-aqueous solvent (the fluorinated cyclic ether and the other non-aqueous solvent). Further, Table 1 shows the molar ratio of the electrolyte salt to the ionic liquid (electrolyte salt/ionic liquid) in the non-aqueous electrolyte used in the test cells of Examples and some Comparative Examples.

In addition, the viscosity and the ionic conductivity of the non-aqueous electrolyte at 25 °C or 50 °C in each of the test cells of Examples 4, 5, 7, 8, 9, and 11 and Comparative Examples 1 and 7 were measured by the above-described method. The measurement results are shown in Table 2.

### [Evaluation]

### (Lithium Dissolution-Deposition Test)

Each test cell was subjected to a lithium dissolution-deposition test under the following conditions. At 50 °C, current was applied at a current density of 5.0 mA/cm² to a capacity density of 10.0 mAh/cm², and then current was applied under the same conditions except that the direction of the current was reversed. After each current application, a 10-minute rest period was provided.

The above current application was repeated, and the number of cycles until an internal short circuit occurred was determined. In addition, the overvoltage at the second cycle and the amount of increase in the overvoltage at the ninth cycle relative to the overvoltage at the second cycle (amount of increase in overvoltage = overvoltage at the ninth cycle - overvoltage at the second cycle) were determined. The respective results are shown in Table 1.

| | Non-aqueous electrolyte | | | | | | | | | Overvoltage at 2nd cycle / mV | Overvoltage increase / mV | Number of cycles until internal short circuit |
|---|---|---|---|---|---|---|---|---|---|---|---|---|
| | Electrolyte salt | | Electrolyte salt / Ionic liquid (molar ratio) | Ionic liquid | | Fluorinated cyclic ether | | Other non-aqueous solvent | | | | |
| | Type | Concentration /mol/kg | | Type | Content / vol.% | Type | Content / vol.% | Type | Content / vol. % | | | |
| Example 1 | LiFSI | 1.00 | 1.64 | Py13FSI | 24 | TFTHF | 76 | - | - | 91.2 | 10.7 | 24 |
| Example 2 | LiFSI | 1.50 | 1.96 | Py13FSI | 30 | TFTHF | 70 | - | - | 62.0 | 40.0 | 24 |
| Example 3 | LiFSI | 1.50 | 1.63 | Py13FSI | 36 | TFTHF | 64 | - | - | 74.9 | 29.2 | 29 |
| Example 4 | LiFSI | 1.50 | 0.82 | Py13FSI | 70 | TFTHF | 30 | - | - | 79.5 | 25.3 | 36 |
| Example 5 | LiFSI | 2.50 | 1.36 | Py13FSI | 70 | TFTHF | 30 | - | - | 85.5 | 22.7 | 34 |
| Example 6 | LiFSI | 2.50 | 1.63 | Py13FSI | 59 | TFTHF | 41 | - | - | 76.3 | 20.3 | 29 |
| Example 7 | LiFSI | 3.00 | 1.64 | Py13FSI | 70 | TFTHF | 30 | - | - | 87.3 | 20.8 | 35 |
| Example 8 | LiFSI | 2.50 | 1.05 | Py13FSI | 90 | TFTHF | 10 | - | - | 100.5 | 25.7 | 36 |
| Example 9 | LiFSI | 2.50 | 0.98 | Py13FSI | 80 | TFTHF | 20 | - | - | 87.4 | 21.5 | 36 |
| Example 10 | LiFSI | 2.50 | 1.93 | Py13FSI | 50 | TFTHF | 50 | - | - | 72.9 | 21.7 | 22 |
| Example 11 | LiFSI | 2.50 | 1.04 | EMIFSI | 70 | TFTHF | 30 | - | - | 58.2 | 21.9 | 38 |
| Example 12 | LiFSI | 2.50 | 1.43 | Py13FSI | 50 | TFTHF | 30 | EPE | 20 | 82.4 | 28.7 | 33 |
| Example 13 | LiFSI | 2.50 | 0.98 | Py13FSI | 80 | TFTHF | 10 | BTFEE | 10 | 94.3 | 24.7 | 26 |
| Example 14 | LiFSI | 2.50 | 1.53 | Py13FSI | 50 | TFTHF | 30 | TFEME | 20 | 82.6 | 34.4 | 32 |
| Example 15 | LiFSI | 2.50 | 1.46 | Py13FSI | 50 | TFTHF | 30 | THP | 20 | 104.1 | 23.7 | 30 |
| Example 16 | LiFSI | 2.50 | 2.25 | Py13FSI | 30 | TFTHF | 30 | THP | 40 | 104.6 | 11.8 | 29 |
| Example 17 | LiFSI | 2.50 | 2.15 | Py13FSI | 30 | TFTHF | 30 | THF | 40 | 76.6 | 31.3 | 32 |
| Example 18 | LiFSI | 2.50 | 6.21 | Py13FSI | 10 | TFTHF | 30 | THP | 60 | 91.1 | 16.2 | 24 |
| Comparative Example 1 | LiFSI | 2.50 | 0.77 | Py13FSI | 100 | - | - | - | - | 133.1 | 33.2 | 34 |
| Comparative Example 2 | LiFSI | 1.92 | | Py13FSI | 65 | - | - | EPE | 35 | 94.6 | 16.5 | 12 |
| Comparative Example 3 | LiFSI | 1.54 | | Py13FSI | 65 | - | - | TFETFPE | 35 | 118.6 | 95.7 | 22 |
| Comparative Example 4 | LiFSI | 2.50 | | Py13FSI | 70 | - | - | TFETFPE | 30 | - | - | - |
| Comparative Example 5 | LiFSI | 2.50 | | Py13FSI | 70 | - | - | EA | 30 | - | - | 1 |
| Comparative Example 6 | LiFSI | 2.50 | | Py13FSI | 70 | - | - | TFEA | 30 | - | - | 1 |
| Comparative Example 7 | LiFSI | 2.50 | | Py13FSI | 70 | - | - | THF | 30 | 111.1 | 44.7 | 28 |
| Comparative Example 8 | LiFSI | 2.50 | 1.27 | Py13FSI | 50 | - | - | THP | 50 | 132.7 | 1 | 20 |
| Comparative Example 9 | LiFSI | 2.50 | - | - | - | TFTHF | 30 | THP | 70 | 71.7 | 12.8 | 20 |
| Comparative Example 10 | LiFSI | 0.50 | 1.65 | Py13FSI | 12 | TFTHF | 88 | - | - | 170.3 | - | 8 |

**[Table 2]**

| Non-aqueous electrolyte | | | | | | | | | | | | |
|---|---|---|---|---|---|---|---|---|---|---|---|---|
| Electrolyte salt | | Electrolyte salt / Ionic liquid (molar ratio) | Ionic liquid | | Fluorinated cyclic ether | | Other non-aqueous solvent | | Viscosity (25 °C) (mPa·s) | Viscosity (50 °C) / mPa·s | Ionic conductivity (25 °C) / mS/cm | Ionic conductivity (50 °C) / mS/cm |
| Type | Concentration / mol/kg | | Type | Content / vol.% | Type | Content / vol.% | Type | Content / vol. % | | | | |
| LiFSI | 1.50 | 0.82 | Py13FSI | 70 | TFTHF | 30 | - | - | 48.0 | 22.6 | 3.9 | 8.1 |
| LiFSI | 2.50 | 1.36 | Py13FSI | 70 | TFTHF | 30 | - | - | 65.9 | 38.7 | 2.0 | 4.8 |
| LiFSI | 3.00 | 1.64 | Py13FSI | 70 | TFTHF | 30 | - | - | 139.4 | 57.6 | 1.5 | 4.1 |
| LiFSI | 2.50 | 1.05 | Py13FSI | 90 | TFTHF | 10 | - | - | 141.6 | 59.8 | 1.7 | 4.5 |
| LiFSI | 2.50 | 0.98 | Py13FSI | 80 | TFTHF | 20 | - | - | 119.7 | 50.9 | 1.9 | 4.7 |
| LiFSI | 2.50 | 1.04 | EMIFSI | 70 | TFTHF | 30 | - | - | 57.2 | 25.0 | 4.4 | 13.0 |
| LiFSI | 2.50 | 0.77 | Py13FSI | 100 | - | - | - | - | 144.8 | 59.6 | 1.7 | 4.5 |
| LiFSI | 2.50 | | Py13FSI | 70 | - | - | THF | 30 | 71.8 | 32.4 | 3.3 | 7.1 |

In the test cell of Comparative Example 1 in which the non-aqueous electrolyte consisting only of the electrolyte salt and the ionic liquid was used, the number of cycles until the internal short circuit occurred was large, but the overvoltage was large. On the other hand, also in the test cells of Comparative Examples 2 to 8 in which only a chain ether, a non-fluorinated cyclic ether, or an ester was further added to the non-aqueous electrolyte, and in the test cell of Comparative Example 9 in which the non-aqueous electrolyte did not contain an ionic liquid, it was not possible to achieve both a small overvoltage and a large number of cycles until an internal short circuit occurred. In addition, in the test cell of Comparative Example 10 in which the non-aqueous electrolyte further contained a fluorinated cyclic ether but had a low electrolyte salt concentration, the overvoltage was large, and the number of cycles until an internal short circuit occurred was also small.

In contrast, in each of the test cells of Examples 1 to 18, in which the non-aqueous electrolyte containing an electrolyte salt and an ionic liquid further contained a fluorinated cyclic ether and the electrolyte salt concentration was adjusted to a predetermined range, the overvoltage was small and the number of cycles until an internal short circuit occurred was large. A case where the overvoltage at the second cycle was not more than 105 mV was evaluated as having a small overvoltage, and a case where the number of cycles until an internal short circuit occurred was not less than 22 was evaluated as having a large number of cycles until an internal short circuit occurred and as having suppressed occurrence of an internal short circuit accompanying repeated charging and discharging.

Among the Examples, in each of the test cells of Examples 4, 5, 7, 8, 9, and 11, in which the total content of the ionic liquid and the fluorinated cyclic ether was not less than 95% by volume and not more than 100% by volume with respect to the total of the ionic liquid and the non-aqueous solvent, and the content of the fluorinated cyclic ether was not less than 5% by volume and not more than 35% by volume, the number of cycles until an internal short circuit occurred was not less than 34, and occurrence of an internal short circuit accompanying repeated charging and discharging was particularly suppressed.

### INDUSTRIAL APPLICABILITY

The present invention can be applied to a non-aqueous electrolyte energy storage device used as a power supply for electronic devices such as personal computers and communication terminals, for automobiles, for industrial applications, and the like.

### DESCRIPTION OF REFERENCE NUMERALS

1 Non-aqueous electrolyte energy storage device
2 Electrode body
3 Container
4 Positive electrode lead
5 Positive electrode external terminal
6 Negative electrode lead
7 Negative electrode external terminal
20 Energy storage unit
30 Energy storage apparatus

## Claims

1. A non-aqueous electrolyte energy storage device comprising:
a negative electrode containing metallic lithium at least in a charged state; and
a non-aqueous electrolyte containing an electrolyte salt, an ionic liquid, and a non-aqueous solvent, wherein
the non-aqueous solvent contains a fluorinated cyclic ether, and
a molality of the electrolyte salt in the non-aqueous electrolyte is not less than 0.8 mol/kg and not more than 3.5 mol/kg.

2. The non-aqueous electrolyte energy storage device according to claim 1,
wherein a content of the fluorinated cyclic ether with respect to the total of the ionic liquid and the non-aqueous solvent is not less than 5% by volume and not more than 95% by volume.

3. The non-aqueous electrolyte energy storage device according to claim 1,
wherein a content of the fluorinated cyclic ether with respect to the total of the ionic liquid and the non-aqueous solvent is not less than 5% by volume and not more than 80% by volume.

4. The non-aqueous electrolyte energy storage device according to claim 1 or 2,
wherein a molar ratio of the electrolyte salt to the ionic liquid is not less than 0.8 and not more than 6.5.

5. The non-aqueous electrolyte energy storage device according to claim 1 or 2,
wherein the non-aqueous solvent further contains at least one selected from the group consisting of a non-fluorinated cyclic ether and a chain ether.

6. The non-aqueous electrolyte energy storage device according to claim 5,
wherein the total content of the non-fluorinated cyclic ether and the chain ether with respect to the total of the ionic liquid and the non-aqueous solvent is not less than 5% by volume and not more than 80% by volume.

7. The non-aqueous electrolyte energy storage device according to claim 1 or 2, wherein the fluorinated cyclic ether is represented by the following formula (1): 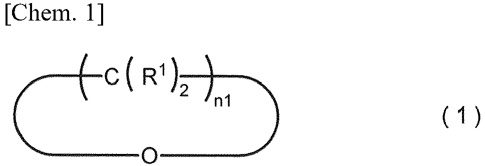
wherein in formula (1), each R¹ is independently a hydrogen atom, a fluorine atom, an alkyl group having carbon atoms of not less than 1 and not more than 4, or a fluorinated alkyl group having carbon atoms of not less than 1 and not more than 4;
provided that at least one of the plurality of R¹ is a fluorine atom or a fluorinated alkyl group having carbon atoms of not less than 1 and not more than 4; and
n1 is 4 or 5.

8. The non-aqueous electrolyte energy storage device according to claim 5,
wherein the non-fluorinated cyclic ether is represented by the following formula (2), and the chain ether is represented by the following formula (3): 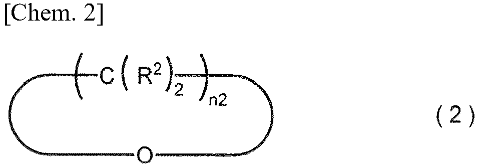
wherein in formula (2), each R² is independently a hydrogen atom or an alkyl group having carbon atoms of not less than 1 and not more than 4; and
n2 is 4 or 5; 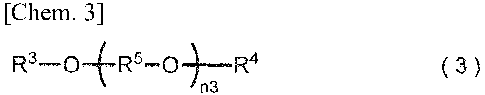
wherein in formula (3), each of R³ and R⁴ is independently an alkyl group having carbon atoms of not less than 1 and not more than 3 or a fluorinated alkyl group having carbon atoms of not less than 1 and not more than 3;
R⁵ is an alkanediyl group having carbon atoms of not less than 1 and not more than 3; and
n3 is 0 or 1.

9. The non-aqueous electrolyte energy storage device according to claim 1 or 2,
wherein the ionic liquid has at least one selected from the group consisting of a quaternary ammonium cation, an imidazolium-based cation, a pyrrolidinium-based cation, a piperidinium-based cation, a quaternary phosphonium cation, and a sulfonium cation.

10. The non-aqueous electrolyte energy storage device according to claim 1 or 2,
wherein the ionic liquid has an imide anion.

11. The non-aqueous electrolyte energy storage device according to claim 1 or 2, wherein the electrolyte salt is an imide salt.

12. A non-aqueous electrolyte comprising an electrolyte salt, an ionic liquid, and a non-aqueous solvent, wherein
the non-aqueous solvent contains a fluorinated cyclic ether, and
a molality of the electrolyte salt is not less than 0.8 mol/kg and not more than 3.5 mol/kg.

13. The non-aqueous electrolyte according to claim 12, the non-aqueous electrolyte being used for a non-aqueous electrolyte energy storage device comprising a negative electrode containing metallic lithium at least in a charged state.

14. A method for manufacturing a non-aqueous electrolyte energy storage device, comprising:
preparing a negative electrode containing metallic lithium at least in a charged state; and
preparing a non-aqueous electrolyte containing an electrolyte salt, an ionic liquid, and a non-aqueous solvent, wherein
the non-aqueous solvent contains a fluorinated cyclic ether, and
a molality of the electrolyte salt in the non-aqueous electrolyte is not less than 0.8 mol/kg and not more than 3.5 mol/kg.
